(19) Europäisches Patentamt
European Patent Office
Office européen des brevets

(11) **EP 1 421 472 B1**

(12) **EUROPEAN PATENT SPECIFICATION**

(45) Date of publication and mention
of the grant of the patent:
**13.06.2007 Bulletin 2007/24**

(21) Application number: **02726404.3**

(22) Date of filing: **22.04.2002**

(51) Int Cl.:
**G06F 7/72** (2006.01)

(86) International application number:
**PCT/IL2002/000318**

(87) International publication number:
**WO 2003/001362 (03.01.2003 Gazette 2003/01)**

(54) **A METHOD AND APPARATUS FOR CARRYING OUT EFFICIENTLY ARITHMETIC COMPUTATIONS IN HARDWARE**

VERFAHREN UND GERÄT ZUR AUSFÜHRUNG EFFIZIENTER ARITHMETIKOPERATIONEN IN HARDWARE

PROCÉDÉ ET UN APPAREIL PERMETTANT D'EFFECTUER EFFICACEMENT DES CALCULS ARITHMETIQUES EN MATÉRIEL INFORMATIQUE

(84) Designated Contracting States:
**AT BE CH CY DE DK ES FI FR GB GR IE IT LI LU MC NL PT SE TR**

(30) Priority: **21.06.2001 IL 14395101**

(43) Date of publication of application:
**26.05.2004 Bulletin 2004/22**

(73) Proprietor: **Discretix Technologies Ltd.**
**42502 Netanya (IL)**

(72) Inventors:
• **GUERON, Shay**
**32714 Haifa (IL)**
• **HADAD, Isaac**
**84434 Beer-Sheva (IL)**

(74) Representative: **Dr. Graf & Partner**
**Intellectual Property,**
**Postfach 518**
**8200 Schaffhausen (CH)**

(56) References cited:
• **BLUM T ET AL: "Montgomery modular exponentiation on reconfigurable hardware" COMPUTER ARITHMETIC, 1999. PROCEEDINGS. 14TH IEEE SYMPOSIUM ON ADELAIDE, SA, AUSTRALIA 14-16 APRIL 1999, LOS ALAMITOS, CA, USA,IEEE COMPUT. SOC, US, 14 April 1999 (1999-04-14), pages 70-77, XP010332298 ISBN: 0-7695-0116-8**
• **ARAZI B: "DOUBLE-PRECISION MODULAR MULTIPLICATION BASED ON A SINGLE-PRECISIONMODULAR MULTIPLIER AND A STANDARD CPU" IEEE JOURNAL ON SELECTED AREAS IN COMMUNICATIONS, IEEE INC. NEW YORK, US, vol. 11, no. 5, 1 June 1993 (1993-06-01), pages 761-769, XP000399844 ISSN: 0733-8716**

**Description**

**Field of the Invention**

The present invention relates to the field of fast and efficient implementation of modular arithmetics in hardware. More particularly, the invention relates to a method and apparatus for carrying out modular arithmetic operations such as modular multiplication and exponentiation, utilizing Montgomery and straightforward methods.

**Background of the Invention**

The core operations of modern Public Key Cryptosystems (PKC) are typically based on performing modular arithmetic functions, in particular modular exponentiation, where modular exponentiation is essentially based on sequences of modular multiplications and modular squares. Consequently, fast methods for performing modular arithmetic functions, particularly in hardware, are of great importance for practical implementation of PKC. The Montgomery method offers an efficient way of carrying out some modular operations, most important of which is modular exponentiation. The advantage of this method is mostly appreciated in hardware implementations of modular exponentiation. Thus, the Montgomery method is widely adopted in implementations of PKCs that implement, for example, RSA, Digital Signature Standard (DSS), Diffie-Hellman (DF) key exchange, and Elliptic Curve Cryptography (ECC) algorithms ("Handbook of Applied Cryptography" by Alfred J. Menezes, Paul C. van Oorschot and Scott A. Vanstone, CRC Press October 1996).

Montgomery Multiplication, Definition: Given the $n$-bit integers $A, B,$ and $N$ ($N > A, B, N$ is odd), the Montgomery multiplication $MMUL(A, B, N, n)$ , denoted also by $MMUL(A,B)$ (for short), is defined by:

$$MMUL(A, B) = A * B * 2^{-n} \mod N$$

Which yields a reduced result, i.e., $0 \leq MMUL(A, B) < N.$

Notations: In the following discussion, the bits of integer values, such as the $n$-bit integer $A = (A_{n-1}, ..., A_1, A_0)_2,$ are represented utilizing the notation $A_i$ ($0 \leq i \leq n-1$), wherein the Most Significant Bit (MSB) $A_{n-1}$ is the leftmost bit, and the Least Significant Bit (LSB) $A_0$ is the rightmost bit, of the integer value $A.$ Additionally, the value of a given variable $S ,$ in the $j$-th iteration, is denoted by $S_{(j)}.$ The notations of modular results, such as $A * B \mod N,$ refer to their reduced value in the range [0, N).

An algorithm for computing Montgomery multiplication (in radix 2) can be carried out by the following steps:

## Algorithm 1:

**Input:** $A, B, N, n$    (Precondition: $A, B, N$ are $n$-bit integers, satisfying $N > A, B$ and $N$ is odd)

**Output:** $MMUL(A, B) = A * B * 2^{-n} \mod N$

```
        S=0
        For I from 0 to n-1 do
```
1.1   $\quad\quad S = S + A_I * B$

1.2   $\quad\quad S = S + S_0 * N$

1.3   $\quad\quad S = S/2$
```
        End for
```
1.4   $\quad\quad\quad$ If $S > N$ Then $S = S - N$
```
        Return S
```

The algorithm main loop requires <u>only</u> a series of additions (steps 1.1 and 1.2) and divisions by 2 (step 1.3).

Step 1.4, called herein the reduction step, is an essential step without which the output of the algorithm, $S$, is not necessarily reduced.

**Example 1:** Table 1 illustrates this process of computing MMUL (A, B) for $A=18=(10010)2$, $B=12=(01100)_2$, with $N=19=(10011)_2$. In this example $n=5$ and the Montgomery multiplication is $18*12*2^{-5}$ mod $19=2$

**TABLE 1:** (Precondition: $S=0$, $A=18$, $B=12$, and $N=19$)

| $I$ | $A_1$ | $S=S+A_1*B$ | $S_0$ | $S=(S+S_0*N)/2$ |
|---|---|---|---|---|
| 0 | 0 | 0 | 0 | 0 |
| 1 | 1 | 12 | 0 | 6 |
| 2 | 0 | 6 | 0 | 3 |
| 3 | 0 | 3 | 1 | 11 |
| 4 | 1 | 23 | 1 | 21 |

Without step 1.4, the output of the algorithm, S, is not necessarily in the range [0, $N$). In particular, $S$ may be of more than $n$ bits. Thus, the additional reduction ($S = S - N$) (step 1.4) is sometimes required in order to shift the algorithm's output to the range [0, $N$). In Example 1 above, the calculation result is $S = 21 > N$, and thus the additional reduction $S = S - N = 21 - 19 = 2$ is required in this case. In the case where $A,B<N$, as assumed, it can be shown (by induction) that before the reduction step (1.4) the result, S, is bounded by $N + B$. Thus, in the cases where $S>N$, after the iteration steps 1.1, 1.2, and 1.3, the additional reduction step 1.4 ($S = S - N$), that is performed at most only once, is sufficient to reduce the final result to the range [0, N), and therefore to ensure that the desired result $S = A * B * 2^{-n}$ mod $N$ is indeed the output of the algorithm.

This Montgomery multiplication algorithm, which computes $MMUL(A,B)$ can be used for computing the regular modular multiplication $A * B$ mod $N$. This can be carried out in more than one way, as illustrated in the following steps:

Method 1:

**Input:** $A, B, N, A'$ ($A, B$, and $N$ are $n$-bit integers, pre-computed value: $A'=A*2''$ mod $N$)

**Output:** $A * B$ mod $N$

$T = MMUL(A', B)$

Return $T$

For example, for the case of $A = 18$, $B = 12$, $N = 19$, and $n = 5$, the auxiliary value $A'=18 * 2^5$ mod $19 = 6$ is pre-computed, and is then used to calculate:

$$T = MMUL(A', B) = 6 * 12 * 2^{-5} \mod 19 = 7$$

Method 2:

**Input:** $A, B, N, A', B'$ ($A, B$, and $N$ are $n$-bit integers, pre-computed values: $A' = A*2''$ mod $N$ and $B' = B*2''$ mod $N$)

**Output:** $A*B$ mod $N$

$T = MMUL(A', B')$

$T = MMUL(T, 1)$

Return $T$

For example, for the case of $A = 18$, $B = 12$, $N = 19$, and $n=5$, two auxiliary values are pre-computed: $A'=18*2^5$ mod $19 = 6$ and $B' = 12*2^5$ mod $19 = 4$ which are then used to calculate: $T = MMUL(A, B') = 6*4*2^{-5}$ mod $19 = 15$ and finally, the result is computed by:

$$T = MMUL(T, 1) = 15 * 1 * 2^{-5} \mod 19 = 7$$

Method 2 involves the computation of auxiliary values, *A'* and *B'*. This transforms the integers *A* and *B* to what is called the "Montgomery base". The first Montgomery multiplication is applied to the transformed numbers, resulting in:

$$T = MMUL\left(A',B'\right) = A' * B' * 2^{-n} \mod N = A * B * 2^n \mod N$$

This corresponds to the regular modular multiplication in the regular representation of *A* and *B*.

The second Montgomery multiplication (by 1) converts the result back to the regular base representation. In other words, it removes the redundant 2" factor from the above result, *T = MMUL(A',B')*, thus obtaining the requested result:

$$T = MMUL(T,1) = \left(A * B * 2^n\right) * 1 * 2^{-n} \mod N = A * B \mod N$$

The overhead involved with Method 1 (computing the auxiliary value) is the main reason for which the Montgomery algorithm is not necessarily considered useful for computing a single modular multiplication, in comparison with a direct approach. However, Method 2 can be used efficiently when several modular multiplications are required. After converting the input to the Montgomery base, all multiplications are performed by means of the Montgomery multiplication algorithm, and the result is converted to the regular base at the end of the multiplications sequence. In such cases, the computational overhead of Method 2 is negligible, and the Montgomery algorithm substantially improves the efficiency in the overall calculations. The most typical example is the computation of the modular exponent $A^E \mod N$ (for an *m*-bit integer value exponent *E*, where with no lose of generality, we assume here that *A<N*), utilizing Method 2 and the Montgomery multiplication. The exponentiation result can be computed, for example, as described hereinbelow (left-to-right binary exponentiation):

<u>**Algorithm 2:**</u>

**Input:** *A, E, N*

**Output:** $A^E \mod N$

$$T_{(m-1)} = A' = A * 2^n \mod N$$

For *I* from *m*–2 to 0 do

2.1        $T_{(I)} = MMUL\left(T_{(I+1)}, T_{(I+1)}\right)$

2.2        if $E_I = 1$ then $T_{(I)} = MMUL\left(T_{(I)}, A'\right)$

End for

2.3      $T_{(0)} = MMUL\left(T_{(0)}, 1\right)$

Return $T_{(0)}$

The computation of the pre-calculated value *A'= A*2^n* mod *N* (0≤*A'*<*N*) converts the input to the Montgomery base, the Montgomery multiplications and squaring (steps 2.1 and 2.2) correspond to the sequence of multiplications and squaring that implement the left-to-right binary exponentiation in the regular base, and the Montgomery multiplication by 1 (step 2.3) converts the result back to the regular base. Reduction (step 1.4) in intermediate steps, in each Montgomery multiplication implemented by algorithm 1, is required in order to make sure that the result remains bounded by $N$. The reduction is of vital importance in implementation of such chained algorithms, since it assures that the input to the subsequent Montgomery multiplication is properly bounded. If reduction is not performed, and the result of one Montgomery multiplication (without the reduction step) exceeds $N$, overflow or erroneous results may occur in subsequent steps.

The main advantage in using the Montgomery multiplication lies in the hardware implementation of this multiplication operation. The *MMUL* algorithm requires, in each step, only the LSB of the accumulating result (step 1.2 above $S = S + S_0 * N$).

The following example demonstrates an exponentiation operation carried out utilizing the algorithm described hereinabove. In this example the calculation of $212^{240} \bmod 249 = 241$ is computed.

**Example 2**: Table 2 illustrates the calculation of $A^E \bmod N$, for $n$-bits values $A$ and $N$, and the $m$-bit value $E$, utilizing the algorithm herein above. In table 2, the value obtained in the preceding step $T_{(I+1)}$ is followed by the result obtained in step 2.1 $T_{(I+1)}^2$, and the result obtained in step 2.2, $T_{(I)}$. In this example $A = 212$, $E = 240 = (11110000)_2$, and $N = 249$. Hence, $A$ is of $n = 8$ bits, $E$ is of $m = 8$ bits, and the pre-calculated value required is $A' = 212 * 2^8 \bmod 249 = 239$.

**TABLE 2:** (Precondition: $A = 212$, $E = 240 = (11110000)_2$, $N = 249$, and $T_{(7)} = A' = 239$)

| $I$ | $E_I$ | $T_{(I+1)}$ | $T_{(I+1)}^2$ | $T_{(I)}$ |
|---|---|---|---|---|
| 6 | 1 | 239 | 370-249=121 | 254-249=5 |
| 5 | 1 | 5 | 217 | 437-249=188 |
| 4 | 1 | 188 | 247 | 323-249=74 |
| 3 | 0 | 74 | 142 | 142 |
| 2 | 0 | 142 | 106 | 106 |
| 1 | 0 | 106 | 289-249=40 | 40 |
| 0 | 0 | 40 | 193 | 193 |

And the final result is obtained by computing $T_{(0)} = MMUL(T_{(0)}, 1) = 193 * 1 * 2^{-8} \bmod 249 = 241$.

In this example, the Montgomery multiplication *MMUL(A,B)* is utilized for the calculation of Montgomery multiplication, Montgomery square, and Montgomery multiplication by 1. As was previously discussed, before the reduction step (1.4), the accumulated result may be greater than $N$, and reduction may be required in order to obtain the (correctly reduced) results of the Montgomery multiplication.

In Example 2, for $I=6$, 5, and 4, reduction was required in performing $MMUL(T_{(I)}, A')$, and for $I=1$ and 6 in performing $MMUL(T_{(I+1)}, T_{(I+1)})$.

It should be noted that the need for reductions substantially complicates hardware realizations of such apparatus, particularly when the number of bits $n$ is significantly large (e.g., $n=512$). Dedicated circuitry is required for detecting the cases where the result is greater than $N$, and for performing the appropriate subtraction (i.e., the required reduction).

Efficient implementations of integer multiplication, achieved by indirect methods that avoid actual multiplication, are known in the literature (e.g., K. Hwang, Computer Arithmetic; Principles, Architecture, and Design, Wiley, New-York, 1979; Chapter 5). Such methods obtain the multiplication result by means of successive additions of appropriately pre-chosen quantities. For example, the value $S = S + AM *A$, where $M$ is of $m=2$ bits long, can be obtained without directly computing the product $M*A$, by using only additions of three pre-stored quantities, as follows. The quantity to be added to the accumulator depends on one of the four possible cases $M=(0,0)$, $M=(0,1)$, $M=(1,0)$, $M=(1,1)$:

If $M=(0,0)$, nothing is added to the accumulator $S$.
If $M=(0,1)$, the value A is added to the accumulator $S$.
If $M=(1,0)$, the value $2*A$ is added to the accumulator $S$.
If $M=(1,1)$, the value $3*A = A+2*A$ is added to the accumulator $S$.

Thus, the sum $S = S + M * A$ can be obtained in one operation, by identifying the appropriate case (a 1:4 multiplexer in hardware) and adding, accordingly, either 0, $A$, $2*A$ or $3*A$ to the accumulator. The additional storage of $A$, $2*A$ and $3*A$ may be bypassed at the cost of (cumbersome) setting the hardware control accordingly: adding $2*A$ may be implemented by shifting the stored value of $A$ and then feeding it to the accumulator, and adding $3* A$ may be implemented by adding the value of $A$ and the shifted value of $A$ to the accumulator.

Consequently, optimizing this operation requires balancing between storage and speed/hardware requirements. The extra storage of the values $A$, $2*A$, $3*A$ may be advantageous if the same operation is repeated many times.

For example, the computation of $S = S + K * A$ when $K$ is of $k$ bits long, can be achieved iteratively. In each of $(1+[klm])$ = $(1+(k/2))$ iterations, the $m=2$ next bits of $K$ are scanned and define a temporary value of $M$ ($m$-bit portions of $M$), with which the above method is used. The number of bits m, designates the bit length of those temporary values (portions of $M$), and thus also define the number of right shifts that should be performed to the addition result $S=S+K*A$. Analogous methods use larger values of $m$, more storage or hardware/control, but a smaller number $(1+[klm])$ of iterations. The same method can be used when the value $M*A + L * B$ is to be added to the accumulator, in order to compute $S = S + M * A + L * B$. In such case, scanning $m$ bits of $M$ and $L$ in each iteration yields $2^{2m}$ combinations for the quantity that is to be added.

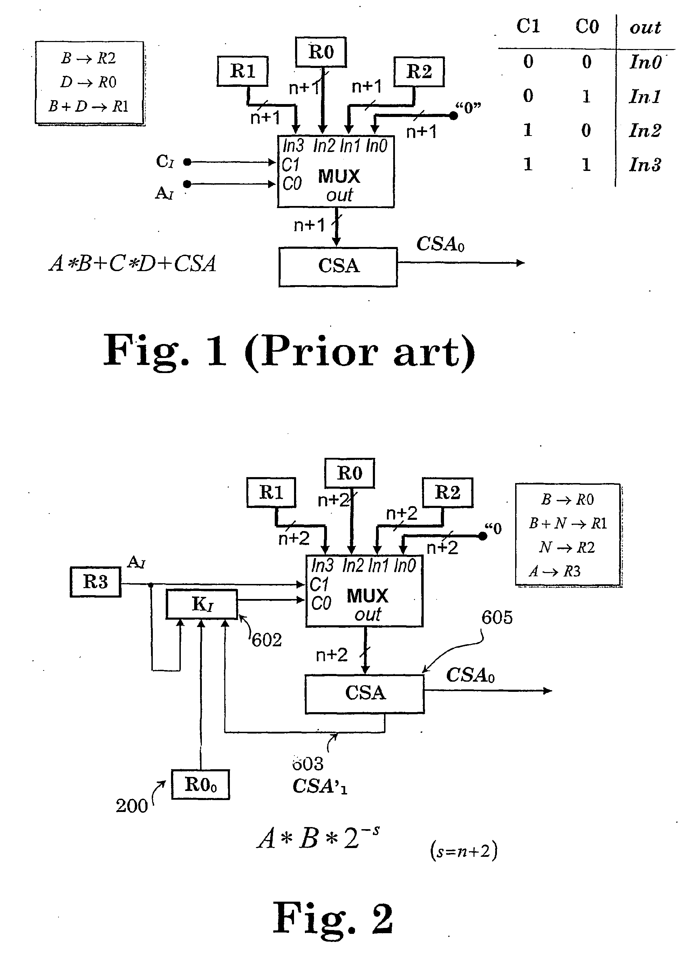

For example, with $m=2$, the $2^{2*2} = 16$ combinations for the added quantity are: 0, $A$, $2*A$, $3*A$, $B$, $2*B$, $3*B$, $A+B$, $A+2*B$, $A+3*B$, $2*A+B$, $2*(A+B)$, $2*A+3*B$, $3*A+B$, $3*A+2*B$, $3*(A+B)$. Storage of 15 quantities is needed unless extra hardware/control is used for adding $2(A+B)$ and/or adding $3(A+B)$ by using the stored value of $(A+B)$. For $m=1$, there are $2^{2*1} = 4$ combinations namely: 0, $A$, $B$, $A+B$. The case $m=1$ is illustrated in Fig. 1 for carrying out multiplication and summation operations of four integers, $A$, $B$, $C$, and $D$. The apparatus depicted in Fig. 1 utilizes three registers $R0$, $R1$, and $R2$, a 1:4 multiplexer (MUX), and a Carry Save Adder (CSA), to carry out the calculation of $A * B + C * D + G$. The registers $R0$ and $R2$, are $n$-bits each, while register $R1$ is of $n+1$ bits. Each of the registers, $R0$, $R1$, and $R2$, is connected to one of the MUX's inputs, $In2$, $In3$, and $In1$, respectively, while the MUX's input $In0$ is constantly fed by a "0" value (an $n$-bit value).

The multiplexer MUX has two control inputs, C0 and C1, such that for each state of the control inputs, C0 and C1, a corresponding input is selected, and output on the MUX's output ($out$). The calculation of $A * B + C * D + G$ is carried out by loading registers $R0$, $R1$, $R2$, and the $CSA$ with the values of $D$, $B+D$, $B$, and $G$, respectively, and serially feeding the data bits of $A$ and $C$ ($A_I$ and $C_I$ ($I=0,1,2,...,n$-1)), through the MUX's control inputs, C0 and C1 respectively.

The CSA is of $n+2$ bits, to allow over flow of 2 bits, and it is utilized for adding the value of the selected input ($In0$, $In1$, $In2$, or $In3$), retrieved via the MUX's output $out$, to its present content. The result of this addition is stored in the CSA, which is then subject to a right shift performed to the CSA content. Shifting the bits of an even binary value to the right is equivalent to the division of that value by 2 (in step 1.3 above). Thus, in each cycle in the operation of this system, the following operations are performed:

1) selection of the respective value on $In0$, $In1$, $In2$, and $In3$;
2) addition of the selected value with the current content of the $CSA$ register; and
3) right shifting the $CSA$ bits, which also introduce the LSB of the $CSA$ (i.e., $CSA_0$) on the $CSA_0$ output.

To implement Steps 1 and 2, the bits of $A$ and $C$, $A_1$ and $C_1$ ($I = 0,1,2,..., n$ -1), are serially introduced on the MUX's control inputs, C0 and C1, starting with the LSBs. Consequently, the MUX's output $out_{(I)}$ may take any of the following values in each and every iteration $I$:

$$out_{(I)} = \begin{cases} 0 & if & A_I = C_I = 0 \\ B & if & A_I = 1 & and & C_I = 0 \\ D & if & A_I = 0 & and & C_I = 1 \\ B + D & if & A_I = C_I = 1 \end{cases} ; \quad (I = 0,1,2,...n-1)$$

The process of calculating $A*B+C*D+G$ is further described by the following pseudo-code.

$$D \rightarrow R0 \; ; \; B + D \rightarrow R1 \; ; \; B \rightarrow R2 \; ; \; G \rightarrow CSA$$

For $I$ from 0 to $n$-1 Do

$$CSA_{(I+1)} = (CSA_{(I)} + out_{(I)})/2$$

End For

After $n$ iterations the CSA's content ($CSA_{(n-1)}$) holds the n+1 Most Significant Bits (MSB) of the calculated result, and another $n$ LSBs, of the calculated result, are obtained on the $CSA_0$ output, during the iterations. The CSA's content may be output utilizing a parallel output bus (not illustrated), or alternatively, by resetting the MLTX's control inputs (i.e., set C0=C1=0), and performing $n+1$ additional iterations, to output the $n+1$ MSBs of the result, on the $CSA_0$ output (serial approach). The main drawback of the serial approach is that it is time-consuming (the addition of $n+1$ cycles is required to obtain the CSA content). On the other hand, although performance is significantly improved utilizing the parallel approach, it is considered costly in terms of hardware means.

This apparatus is efficiently utilized to perform Montgomery multiplication by applying the Montgomery method, as described in Patent Application WO 98/50851 and US 6,185,596. In those Patent Applications a precomputed constant ($J = -N^{-1} \bmod 2^n$) is utilized to calculate in each iteration the number of times, $Y=(A*B*J) \bmod 2^n$, that modulus $N$ should be added to the multiplication of $A * B$. This method requires testing, after each iteration of the Montgomery process, if the addition result exceeds the modulus value $N$. In such cases, the result does not exceed $2 * N$. Consequently, dedicated hardware is utilized in those implementations for testing the result in each iteration, and for subtracting the modulus value $N$ from the result, whenever it exceeds the modulus value.

Methods for implementing modular multiplication by using the Montgomery multiplication as known in the art, are mainly affected - in both time and hardware - by the need to reduce the output resulting values, to values which are smaller than $N$. Furthermore, the reduction step, being dependent on the specific input (via the "*if*" statement) makes this implementation susceptible to (side channels) attacks. Therefore, although the Montgomery multiplication method enables efficient hardware implementation of modular arithmetic operations, such as modular exponentiation, there is a need for improving the hardware implementations of such operations. This may be achieved utilizing a method and an apparatus that does not require repeated reduction after each Montgomery multiplication.

It is an object of the present invention to provide a method and apparatus for carrying out a modified version of Montgomery multiplication in which the intermediate and the final calculation results do not exceed known bounds, and wherein no reduction is required during a chained sequence of such modified Montgomery multiplication, such as the sequence required for an exponentiation process, and the final result of the exponentiation process, is automatically reduced (between 0 and $N$).

It is another object of the present invention to provide a method and apparatus (called also a PKI apparatus herein) allowing efficient hardware implementations of modular exponentiation, and other modular arithmetic operations, based or not based on the Montgomery multiplication, which include the basic operations required for hardware implementation of public key cryptosystems.

It is yet another object of the present invention to provide a method and apparatus allowing efficient hardware implementations of various modular exponentiation algorithms such as right-to-left, left-to-right, *m*-array, and sliding-window exponentiation algorithms.

It is a still further object of the present invention to provide a method and apparatus for a secure PKI apparatus, based on a non-reduced and modified Montgomery multiplication, which is proof against timing attacks.

Blumetal : "Montgomery modular Exponentiation on Reconfigurable Hardware", 14TH IEEE SYMP-on Arithmeric (ARITH-14), pp70-77, discloses an example of an array for non-reduced extended Montgomery multiplication.

### Summary of the Invention

The present invention is directed to an apparatus as set out in the claims.

### Brief Description of the Drawings

In the drawings:

- Fig. 1 is a block diagram schematically illustrating a prior art apparatus for carrying out multiplication and addition operations;
- Fig. 2 is a block diagram schematically illustrating a preferred embodiment of the invention for computing a non-reduced and extended Montgomery multiplication;.
- Fig. 3 schematically illustrates one preferred embodiment of the invention for generating the $K_1$ bit ;
- Fig 4 is a block diagram schematically illustrating a preferred embodiment of the invention for carrying out modular arithmetic operations, utilizing Montgomery multiplication;
- Fig 5 schematically illustrates a process for computing interleaved Montgomery multiplication, according to a preferred embodiment of the invention;
- Fig 6A and 6B schematically illustrates a possible embodiment of a CSA device according the method of the invention; and
- Fig 7A and 7B are flowcharts illustrating methods for carrying out exponentiation by utilizing the PKI apparatus.

## Detailed Description of Preferred Embodiments

The present invention refers to a method and apparatus for carrying out modular arithmetic operations, which is fast and efficient in terms of hardware means. At the core of the preferred embodiment of the invention is the computation of the modular multiplication of two integers $A$ and $B$ modulo $N$ (hereinafter $A. B$ mod $N$), based on a modified (extended) Montgomery method.

A modified (extended) Montgomery multiplication - definition: For $n$ bits long odd modulus $N$, integers $A, B$ such that $A, B \leq 2 * N$, and an integer $s \geq n$, define the Non-Reduced and extended Montgomery Multiplication (NRMM) by $NRMMA^{(s)}(A,B,N) = A*B*2^{-s}$ mod$(N + \varepsilon*N)$, where $\varepsilon = 0$ for a reduced result, and $\varepsilon = 1$ for a non-reduced result. For short, when the context (i.e., $N$ and $s$) is known, $NRMM^{(s)}(A, B)$ will be used hereinafter to denote $NRMM^{(s)}(A,B,N)$. The computation of $NRMM^{(s)}(A,B)$ is carried out by repeating steps 1.1, 1.2, and 1.3, $s (\geq n)$ iterations, without performing the reduction step 1.4. Hereinafter the result of such computation is also termed as non-reduced and extended Montgomery multiplication. It is important to note that the result obtained by this non-reduced and extended Montgomery multiplication is not necessarily reduced (i.e., $NRMM^{(s)}(A, B, N)$ may be greater that the modulus $N$).

A process for computing $NRMM^{(s)}(A, B)$ is given by the following steps:

## Process 1:

**Input:** $A, B, N, s, n$ (Precondition: $N$ is an $n$-bit integer with $A, B < 2*N$, $N$ is odd, and $s \geq n$)

**Output:** $NRMM^{(s)}(A,B)$

$S=0$

For $I$ from 0 to $s-1$ do

3.1. $\quad S = S + A_{(I)} * B$

3.2. $\quad S = S + S_0 * N$

3.3. $\quad$ S = S/2

End for

Return $S$

The special case where $A, B < N$ and $s=n$ is the classical Montgomery multiplication which is used in most applications where the final reduction step is ignored. According to the method of the invention this process is performed without performing reduction (step 1.4), and in a preferred embodiment of the invention, $s=n+2$ is utilized, wherein for inputs bounded by $2* N$, the result obtained is also bounded by $2 * N$, although it is sufficient to require that $B < 2 * N$ and that A is not of more that $n+1$ bits.

The method of the present invention is based on the following facts: when performing $s=n+2$ iterations, with $n$ bits long modulus $N$, $(n+1)$ bits long input values $A$ and $B$ (where $A, B < 2*N$, the final result of $NRMM^{(s)}(A,B)$ does not exceeds $2*N$, and the temporary accumulated results (step 3.2) do not exceed $6 * N$. This observation is of significant importance, since it allows for successive applications of this extended and non-reduced Montgomery Multiplication, in which the input and the output values are bounded by the same upper bound ($2*N$), thus eliminating potential overflows. As explained before, the exponentiation process $A^E$ mod $N$ can be implemented by means of a sequence of Montgomery multiplications and Montgomery squaring. A $MMUL(A,A)$ operation with an $n$ bits long operand $A$ ($A<N$) may produce a non-reduced result larger than $N$ but smaller than $2*N$. Thus, non-reduced Montgomery Multiplication with $s=n+2$ rounds allows performing a continuous exponentiation sequence of $NRMM^{(s)}$s without a need for reduction in the intermediate steps, with storage registers of length ($n+2$) bits and accumulator capable of computing up to ($n+3$) bits results. As will be explained hereinafter, an implementation of ($n+2$) bits accumulator ($CSA$) may be utilized according to the method of the invention. Moreover, $s=n+2$ is the minimal number of rounds that guarantees such exponentiation without reduction.

The computation of the non reduced extended Montgomery multiplication is implicitly based on adding the value $K. N$ (for some $K \geq 0$) to the product $A * B$. The value of $K$ is not known in advance, and is constructed iteratively. In the preferred embodiment of the invention, in each iteration of the process, another bit $K_I$ of the integer $K$ is computed, as will be described hereinafter. The modulus value $N$ may be added to the product of $A * B$ any number of times, and could still be considered as the same result modulo $N$, that is, the result after adding $K*N$ yields the same residue modulo $N$ if it is reduced to the range [0, $N$). The value of $K$ is chosen in away that $A*B + K*N$ is divisible by $2^s$. The result $A*B+K*N$ is divided by $2^s$ (shifted to the right s times), for disposing of s zeros from the result's LSBs. Thus, the result is actually the outcome of the s successive Right Shift $(RSH^s)$ operation, $RSH^s(A*B+K*N)=(A*B+K*N)/2^s$, wherein $RSH^s(X)=X*2^{-s}$ denotes s shifts of $X$ to the right. These shifts are performed in each iteration (step 3.3).

The $NRMM^{(s)}$ performed according to the method of the invention consists of $s=n+2$ iterations, in which a value is added to an accumulated result. The value that is added to the accumulated result, in each iteration, is chosen such that the temporary cumulative addition result of step 3.2 is an even number. Therefore, the LSB bit of the temporary value of the cumulative result is always zero, and it can be divided by 2 (step 3.3) by means of one right shift.

More particularly, whenever the computation result of $S = S + A, * B$ is an odd value, the (odd) modulus $N$ is added to $S$. Thus, in each iteration the following *calculation is performed*

$$S = \begin{cases} S + A_I * B & if \quad S + A_I * B \quad even \\ S + A_I * B + N & if \quad S + A_I * B \quad odd \end{cases}.$$ Therefore, the result may be always divided by 2, without a remainder (i.e., by a right shift).

According to a preferred embodiment of the invention, a modification of the classical Montgomery multiplication method is utilized to facilitate implementations for modular arithmetic computations, which can be realized completely by hardware. In prior art methods for computing the classical Montgomery multiplication, the computation of $MMUL(A, B) = A * B * 2^{-n}$ mod $N$ is obtained in a process of $n$ iterations, wherein $n$ is the number of bits in the modulus $N$. There is a substantial advantage in performing more than $n$ iterations in this computation, as previously discussed. In a preferred embodiment of the invention, $s=n+2$ is utilized, and the following arguments hold for this type of Montgomery multiplication:

When performing $s=n+2$ iterations to compute $NRMM^{(s)}(A,B)$, with $n$ bits long input values $A$ and $B$, $(A, B < N)$, and with $n$ bits long modulus $N$, all the bits of $A$ are scanned, the final result does not exceeds $N+B < 2*N$ and the temporary accumulated results do not exceed $2*(N+B) < 4*N$.

Moreover. when performing $s=n+2$ iterations to compute the non-reduced and extended $NRMM^{(s)}(A,B)$, with $(n+1)$ bits long input values $A$ and $B$, (where $A, B < 2*N$), and with $n$ bits long modulus $N$, all the bits of $A$ are scanned, the final result does not exceeds $(N+B+N)/2 < 2*N$ and the temporary accumulated results do not exceed $2*(N+B) < 6*N$.

It is important to note that when performing $s=n+2$ iterations to compute $NRMM^{(s)}(A,1)$ with $(n+1)$ bits long input value $A$ $(A < 2*N)$, and with $n$ bits long modulus $N$, all the bits of $A$ are scanned, and the final result obtained is reduced, i.e., is smaller than $N$.

As a result, when a chained sequence of non-reduced Montgomery multiplications is performed, with an $n$ bits long modulus $N$, and inputs that are bounded by $2*N$, the outputs remain bounded by $2*N$, and one (final) extended Montgomery multiplication by 1 reduces the result to the range [0, $N$) (without actually performing the reduction of step 1.4).

The latter observations are of significant importance in applications. As explained before, the exponentiation process $A^E$ mod $N$ $(A<N)$ can be implemented by means of a sequence of Montgomery multiplications and Montgomery squaring $(MMUL(X,A), MMUL(X,X))$ operations, that even with an $n$ bits long *operand X (X<N),* and certainly with an $n+1$ bits operand $X < 2 * N$, may produce a non-reduced result larger than $N$ but smaller than $2*N$. The modified Montgomery Multiplication (non-reduced) with $s=n+2$ rounds allows performing a continuous exponentiation sequence of $NRMM^{(s)}$ s without a need for reduction in the intermediate steps, with storage registers of length $(n+2)$. bits and accumulator of length $(n+3)$ bits (i.e., an $(n+2)$ bits long accumulator that includes one additional bit for a carry). Moreover, $s=n+2$ is the minimal number of rounds that guarantees such exponentiation without reduction.

**Example 3**: in the following example the modified Montgomery Multiplication is utilized for calculating the exponent $A^E$ mod $N$, for $A = 212$, $E = 240 = (11110000)_2$ $(m = 8)$, and $N = 249$ $(n = 8$, as in Example 2). The modified Montgomery multiplication is carried out by performing $s = n + 2 = 10$ iterations, and thus the pre-calculation of $A' = 212 * 2^{10}$ mod $249 = 209$ is required.

TABLE 3: (Precondition: $A = 212$, $E=240 =(11110000)_2$, $N = 249$ , and $T_{(7)}= A'= 209$)

| $I$ | $E_I$ | $T_{(I+1)}$ | $T_{(I+1)}^2$ | $T_{(I)}$ |
|---|---|---|---|---|
| 6 | 1 | 209 | 235 | 269 |
| 5 | 1 | 269 | 121 | 254 |
| 4 | 1 | 254 | 241 | 296 |
| 3 | 0 | 296 | 319 | 319 |
| 2 | 0 | 319 | 175 | 175 |
| 1 | 0 | 175 | 160 | 160 |

(continued)

| I | $E_I$ | $T_{(I+1)}$ | $T_{(I+1)}^2$ | $T_{(I)}$ |
|---|---|---|---|---|
| 0 | 0 | 160 | 25 | 25 |

In table 2, the value obtained in the preceding step $T_{(I+1)}$ is followed by the result obtained in step 2.1 $T_{(I+1)}2$, and the result obtained in step 2.2, $T_{(1)}$. The final result is obtained by computing $T_{(0)} = NRMM^{(s)}(T_{(0)},1) = 241$. As shown, the results of the intermediate Montgomery multiplications that were performed were <u>not</u> reduced. In the operation of step 2.2 performed in iterations $I$=6, 5, 4, and 3, the results were $NRMM^{(s)}(T_{(1)},A_{\cdot}) > N$, and for the operation of step 2.1 in the iteration $I$=3 the result $NRMM^{(s)}(T_{(I+1)},T_{(I+1)}) > N$. As discussed before, the non-reduced Montgomery multiplications are bounded, and do not exceed $2*N$. Table 4 exemplifies the benefits of the modified Montgomery Multiplication, for the calculation of $NRMM^{(s)}(319,319)$, as performed in step $I$=3 in Table 4 hereinabove.

**TABLE 4:** (Precondition: $S=0$, $A$=319=$(100111111)_2$, $B$=319, and $N$=249)

| I | $A_{(I)}$ | $S = S + A_{(I)}*B$ | $S_0$ | $S = S + S0*N$ | $S = S / 2$ |
|---|---|---|---|---|---|
| 0 | 1 | 319 | 1 | 568 | 284 |
| 1 | 1 | 603 | 1 | 852 | 426 |
| 2 | 1 | 745 | 1 | 994 | 497 |
| 3 | 1 | 816 | 0 | 816 | 408 |
| 4 | 1 | 727 | 1 | 976 | 488 |
| 5 | 1 | 807 | 1 | 1056 | 528 |
| 6 | 0 | 528 | 0 | 528 | 264 |
| 7 | 0 | 264 | 0 | 264 | 132 |
| 8 | 1 | 451 | 1 | 700 | 350 |
| 9 | 0 | 350 | 0 | 350 | 175 |

The result obtained is $319*319*2^{-10}$ mod 249 =175, and evidently all the temporary accumulated results are bounded by $6*N$. It should be noted that for $I$=5 a temporary result of $S = S + S_0 * N$ =1056 = $(10000100000)_2$ is obtained, which is of 11 bits ($n$+3). In fact, this is the maximal bit length that is required for such calculations utilizing the non-reduced Montgomery Multilication, and therefore the CSA should be capable of computing results that are up to $n$+3 bits. However, due to the continuous right shifts that are performed in the CSA in each operation, it is implemented as an $n$+2 bit CSA.

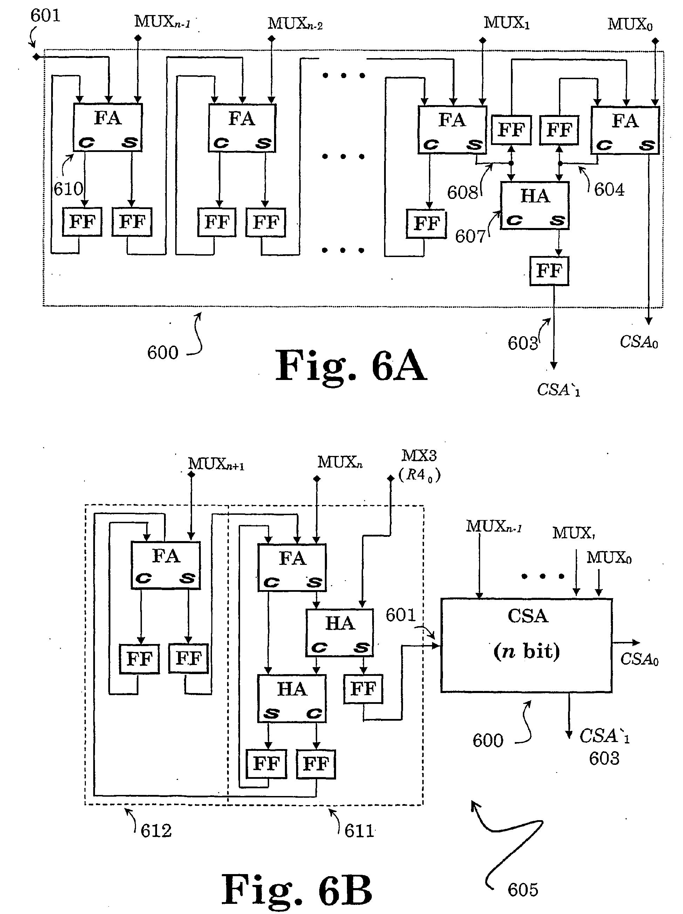

The $K_1$ bit takes the value $S_0$, the LSB of the partial result $S = S + A_1 *B$, which is realized in each iteration. This value ($K_1$) is completely determined by the <u>least significant bits</u> of the results of the <u>previous</u> iteration, and other known values, and can be realized by $K_1 = (A_1 \cdot B_0) \oplus CSA'_1$, were $CSA'_1$ (603) is an output obtained from the CSA. As will be explained in details with reference to Fig. 6, with some additional hardware the CSA can provide the $CSA'_1$ (603) output *whic*h is used to speed up the process of producing the $K_1$ bit. This realization can be easily implemented in hardware. An apparatus based on the determination of $K_1$, according to a preferred embodiment of the invention, is illustrated in Fig. 2. An additional shift register, $R3$, is used in this apparatus for feeding the $A_1$ bits of $A$. The $R3$ register has a serial output, and it consists of s bits for holding the value of $A$, in its $n$ LSBs, and the two additional (zero) bits in its 2 leftmost MSB locations, which are utilized for carrying out two additional iterations ($s$=$n$+2). The CSA, which is of $s$+2 bits, acts as an additional storage device, and thus there is no need for an additional storage device for partial results that are obtained in intermediate steps.

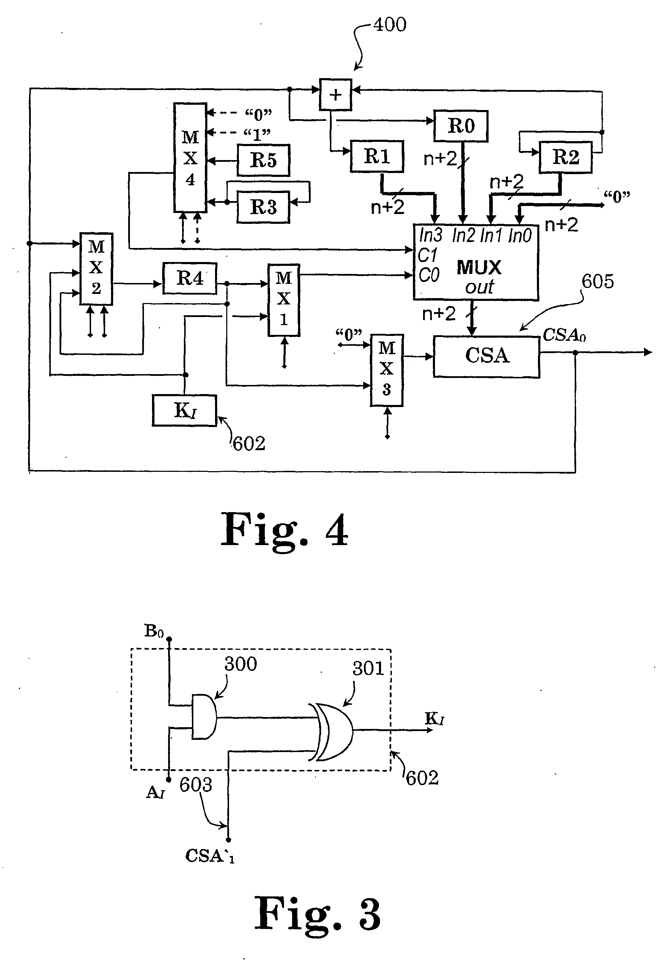

In the preferred embodiment of the invention, the value of $K_1$ is realized from the values of $A_1$, $R0_0$, and CSA; (603). With reference to Fig. 2, the value of $K_1$ is realized utilizing appropriate circuitry 602 (for which a possible implementation is illustrated in Fig. 3), which receives $A_1$, $R0_0$, and $CSA'_1$, as inputs. The bit $B_0$ is placed in a latching device 200, which receives the LSB of register $R0$ ($R0_0$). To carry out the calculation of $NRMM^{(s)}(A,B)$, the system is initialized by loading the values $B$, $B+N$, $N$, and A, into the respective registers, $R0, R1, R2$, and $R3$, and by zeroing the content of the CSA. Thus $K_0$ will equal "1" only if $A_0 = B_0 = 1$.

It should be understood that when Montgomery Multiplication is performed, and $N$ is odd, the content of the CSA is always even, which enables the division by 2 to be carried out by means of one right shift, without a remainder. In addition, the LSB of the CSA is obtained on the $CSA_0$ output, and hence, in case there is a remainder (regular multiplication), it is obtained on the $CSA_0$ output.

Fig. 3 demonstrates one possible implementation of a circuitry 602 for providing the $K_1$ bit. The realization in Fig. 3 is carried out utilizing an AND gate 300 and an Exclusive Or (XOR) gate 301, wherein the inputs of the AND gate are the bits $A_1$ and $B_0$, and the XOR gate inputs are the output of the AND gate 300, and $CSA_1'$ 603. The $CSA_1'$ 603 output from the $CSA$ produces an expected value for the $CSA$ LSB, and therefore speeds and simplifies the realization of the $K_1$ bit.

The method of the invention, as described and exemplified hereinabove, is utilized for a fast and efficient computation of the extended and non-reduced Montgomery multiplication $NRMM^{(s)}(A,B)$, wherein $A$ and $B$ are smaller than $2*N$, and $N$ is up to $n$ bits (and $s \geq n + 2$). This apparatus can be modified to allow modular products computation of integers, which have more the $n$-bits, which is also known as the Montgomery interleaved modular multiplication, as will be discussed later.

Fig. 4 depicts an apparatus, according to a preferred embodiment of the invention, for carrying out arithmetic operations based on the extended non-reduced Montgomery modular multiplication. The apparatus, also termed Public Key Interface (PKI) herein, is based on 6 registers (each of $n+2$ bits), R0, R1, R2, R3, R4, R5 and a Carry Save Adder (of $n+2$ bits), $CSA$, with some control (not shown). The PKI apparatus is capable of performing various arithmetic and modular arithmetic operations, as will explained hereinbelow.

In the apparatus of Fig. 4, the additional multiplexers, *MX1, MX2, MX3* and *MX4,* and the shift registers *R4* and *R5,* are introduced. The control input C1 of the MUX is connected to the output of *MX4,* which acts as an arbitrator for selecting between the serial outputs of registers *R3* and *R5.* Registers *R2, R3* and *R4,* have serial inputs and serial outputs, and are capable of performing cyclic bit rotation. The other MUX control input, C0, is connected to the output of *MX1,* which acts as an arbitrator to select the input value from register *R4,* or from the circuitry that produces the value $K_1$. The register *R4* has a serial input, which is connected to the output of *MX2,* which acts as an arbitration for selecting between the input of the $CSA_0$ value, the output of *R4* (useful when cyclic bit rotation of *R4* is performed), or the value of $K_1$ 602.

The third multiplexer, *MX3,* selects the input to the *CSA* serial input, and may select a "0" value or the output of *MX4.* The output of *MX3* is added to the *n*-th bit of the *CSA,* so that in each step the *CSA* content is set by performing the calculation of $CSA_{(1+1)}=(CSA_{(1)}+out_{(1)}+MX3_{(1)}*2")/2$ (where $out_{(1)}$ and $MX3_{(1)}$ are the outputs from the *MUX* and *MX3* devices respectively), as will be discussed herein. It should be noted that register *R5* is utilized only for carrying out squaring operations which are involved in more complex arithmetic computations (i.e., exponentiation). It will be shown that for performing squaring operation register *R5* is loaded with the content of register *R0.* Therefore, one may implement the same apparatus without register *R5,* and read the subsequent bits of register *R0* utilizing multiplexing techniques. A possible embodiment of the *CSA* is illustrated in Figs. 6A and 6B.

The *CSA* illustrated in Figs 6A and 6B is based on a serial approach, wherein a set of *n* Full Adders (FA) are serially connected. The *CSA* 600 depicted in Fig. 6A is an *n* bits *CSA,* in which each FA has 3 inputs, and 2 outputs, a Carry (*C*) and Sum (*S*), each of which is the input of a Flip-Flop (FF) device. Each FA receives the following inputs: the output of the FF which receives the *S* output of the subsequent FA; the output of the FF which receives its own *C* output, and a corresponding input from the MUX ($MUX_{n-1}$, $MUX_{n-2}$ ,..., $MUX_0$). In this way, the right-shift of the CSA content, and the addition of the MUX output, *out,* are effected. The leftmost FA device 610 receives an input from another two stages, 611 and 612, depicted in Fig 6B.

The additional stages, 611 and 612, depicted in Fig. 6B are utilized to expand the *n* bit CSA 600 of Fig. 6A, into a (n+2) bit *CSA.* The *n*-th stage 611 in Fig. 6B, is utilized for the addition of $MX3_{(l)} *2^n$ to the *CSA* content. Although it is shown that the addition of 4 bits is performed by the *n*-th stage 611, it should be understood that in practice only 3 bits are summed by this stage. More particularly, when performing the Montgomery based computations, the input received from *MX3* is always in zero state, and when performing regular multiplication, which are part of an interleaved multiplication, the input received from the (*n*+1)-th stage 612 is in zero state.

To accelerate the system performance, the *C* output 604 of the first stage FA, and the *S* output 608 of the second stage FA, are connected to the Half Adder (HA) 607 which its *S* output is connected to a FF from which the output $CSA_1'$ 603 is provided for the circuitry utilized for determining $K_1$. The HA 607 may be replaced by a logical XOR gate, or any device capable of realizing the $\oplus$ operation (i.e., base 2 modular addition). It should be also noted that the serial output of the *CSA,* $CSA_0$ is not provided via an FF device, but instead it is obtained directly from the *S* output of the first stage's FA.

The application of various arithmetic operations, according to a preferred embodiment of the invention, is described in the following discussion. While this is a limited set of operations, it does not limit the application of a wider set comprising other possible operations, utilizing the method of the invention, and is therefore introduced here only for the purpose of illustration.

Montgomery square *(NRSQR*[(s)]

The following process is utilized for the computation of $CSA = (B*B+*K*N+CSA)/2^s$, and therefore provides the Non-Reduced and Extended Montgomery Squaring of an integer value *B*, *NRMM*[(s)]*(B,B)*. The number of rounds is $s \geq n$ , however it is shown that the optimal choice is $s = n + 2$.

$$\textbf{Input: } B, N, s \ (B \rightarrow R0, B + N \rightarrow R1, N \rightarrow R2)$$

$$\textbf{Output: } NRSQR^{(s)} = NRMM^{(s)}(B,B)$$

$$R0 \rightarrow R5$$

For $I$ from 0 to $s$-1 do

$$K_I = LSB(CSA + R5_I * R0_0)$$

$$CSA = \left( CSA + \begin{cases} 0 & if & R5_I = 0 & K_I = 0 \\ R0 & if & R5_I = 1 & K_I = 0 \\ R2 & if & R5_I = 0 & K_I = 1 \\ R1 & if & R5_I = 1 & K_I = 1 \end{cases} \right) / 2$$

End for

Return $CSA$

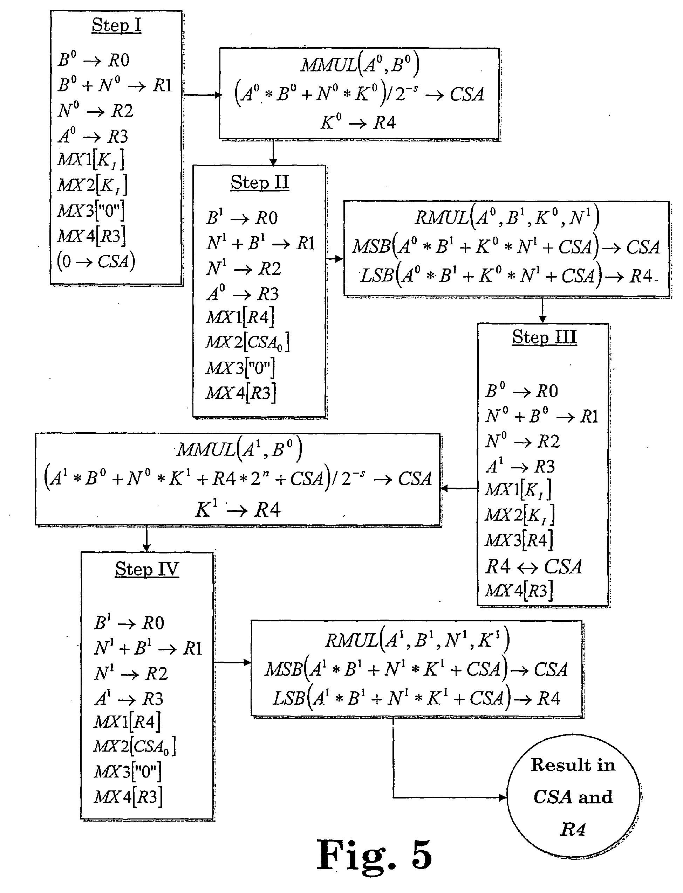

For this calculation; the control inputs of *MX1, MX2, MX3,* and *MX4* are set to select the input of $K_1$, $K_1$, "0", and *R5* respectively. It should be noted that for this computation the input selection made for *MX2* does not affect the result. When this operation is performed as part of an interleaved multiplication the control input of *MX3* is set to select the *R4* input. After performing s iterations, the value of *K* is obtained in the *R4* register. The content of *R5* may be loaded (Fig. 5) with the content of register *R0,* utilizing conventional parallel/serial techniques (not illustrated) or by software. It should be understood that the *NRSQR* process may be utilized to compute $(B*B+K*N+CSA)/2^s$, or $(B * B + K * N)/2^s$ by zeroing the content of the CSA in the initialization steps.

Non-reduced and extended Montgomery multiplication *(NRMM*[(s)])

The non-reduced Montgomery multiplication implemented by the PKI apparatus, is described according to the method of the invention. The following process calculates the non-reduced result $CSA = (A * B + K * N + CSA)/2s$ .

**Input:** $A, B, N, s$ $(A \rightarrow R3, B \rightarrow R0, B+N \rightarrow R1, N \rightarrow R2)$

**Output:** $NRMM^{(s)}(A, B)$

For I from 0 to $s$-1 do

$$K_I = LSB(CSA + R3_I * R0_0)$$

$$CSA = \left( CSA + \begin{cases} 0 & if & R3_I = 0 & K_I = 0 \\ R0 & if & R3_I = 1 & K_I = 0 \\ R2 & if & R3_I = 0 & K_I = 1 \\ R1 & if & R3_I = 1 & K_I = 1 \end{cases} \right) / 2$$

End for

Return $CSA$

The control inputs of *MX1* and *MX4* are set to select the inputs of $K_1$ and *R3*, respectively. The control inputs of *MX2* and *MX3* are set to select the inputs of $K_1$ and "0", respectively, when a simple $NRMM^{(s)}$ is performed, or alternatively, the input of $K_1$ and *R4,* respectively, as part of an interleaved multiplication (illustrated in Fig. 5). As previously mentioned, the value of *K* is obtained in the *R4* register as the *s* cycles of the calculation are completed. Of course the NRMM(s) process may be also utilized to compute $(A*B+K*N)/2^s$, by zeroing the content of the *CSA* in the initialization steps.

Montgomery multiplication by 1 (MMULBY1(s))

The following process is utilized for computing $CSA = (B + K * N + CSA)/2^s$, for some value *B*, utilizing the PKI apparatus, according to the method of the invention. As previously explained, for *B* <2**N* and *s=n+2,* the result obtained by the *MMULBY1(s)* (*B*) operation is reduced (for *B<2*N* and *s=n+2 MMULBY1(s)(B) < N*).

**Input:** $B, N, s$ $(B \rightarrow R0, B+N \rightarrow R1, N \rightarrow R2, 1 \rightarrow R3)$

$$\text{Output:}\ MMULBY1^{(s)}(B) = NRMM^{(s)}(B,1)$$

$$K_0 = LSB(CSA + R0_0)$$

$$CSA = \left( CSA + \begin{cases} R0 & if & K_0 = 0 \\ R1 & if & K_0 = 1 \end{cases} \right)/2$$

For $I$ from 1 to $s$-1 do

$$K_I = CSA_0$$

$$CSA = \left( CSA + \begin{cases} 0 & if & K_I = 0 \\ R2 & if & K_I = 1 \end{cases} \right)/2$$

End for

Return $CSA$

The control inputs of $MX1$, $MX3$, and $MX4$ are set to select the input of $K_1$, "0", and $R3$ respectively (the selection of $MX2$ does not affect this operation). The value of $K$ is obtained in the $R4$ register, and the final result is obtained in the $CSA$, as the $s$ cycles of the calculation are finished. It should be noted that instead of loading $R3$ with the value of 1 ($n$+2 bits), an external control may be utilized for forcing "1" at the $MX4$ output, at the first cycle, and "0" at the remaining cycles (illustrated by dashed lines in Fig. 4). As before, the computation of $(B+K*N)/2^s$ can be obtained by zeroing the content of the $CSA$ in the initialization steps.

Regular multiplication ($RMUL$)

There are various ways of implementing regular multiplication utilizing the PKI apparatus, according to the method of the invention. The following process is one possible way for computing $CSA : R4 = A * B + C * D + CSA$ (the content of the $CSA$ holds the results of the previously performed operation, or alternatively it may be set to a desired value). The MSB of the $RMUL$ operation is obtained in the CSA, and the LSB in $R4$.

**Input:** $A, B, C, D, n$ $(B \to R0, B+D \to R1, D \to R2, A \to R3, C \to R4)$

**Output:** $RMUL(A,B,C,D) = A*B + C*D + CSA$

For $I$ from 0 to $n$-1 do

$$CSA = \left( CSA + \begin{cases} 0 & if & R3_I = 0 & R4_I = 0 \\ R0 & if & R3_I = 1 & R4_I = 0 \\ R2 & if & R3_I = 0 & R4_I = 1 \\ R1 & if & R3_I = 1 & R4_I = 1 \end{cases} \right)$$

$$R4 = R4/2 + CSA_0 * 2^{n-1}$$

$$CSA = CSA/2$$

End for

Return $CSA$ & $R4$

The control inputs of $MX1, MX2, MX3,$ and $MX4$ are set to select the inputs of $R4, CSA_0,$ "0", and $R3,$ respectively. After performing $n$ iterations, the $n$ LSBs of the result are obtained in the register $R4$, and $n$ MSBs of the result are obtained in the $CSA$.

Montgomery exponent

The PKI application of an exponent calculation is based on the exponent process that was described hereinabove, for computing. $A^E$ mod $N$ ($A<N$ with no lose of generality). For carrying out this calculation with the PKI apparatus, the pre-calculated value $A' = A*2^s$ mod $N$ is required. For this particular process, an adjusted (truncated) value E' for the exponent $E = (e_{m-1}, e_{m-2},...,e_0)$ is required, wherein the MSB $e_{m-1}$ is eliminated, and the bit order is reversed, thus obtaining E' = $(e_0, e_1,..., e_{m-2})_2$ ($m$ is the number of bits in $E$).

**process 2:**

**Input:** $m$, $A'$, $N$, $E'$ $(A' \to R0,\ A' + N \to R1\ , N \to R2,\ A' \to R3,\ E' \to R4)$

**Output:** $CSA = A^E \bmod N$    (left-to-right approach)

```
        For I from 0 to m-2 do
```
$$0 \to CSA$$

4.1. $\qquad R0 = NRSQR^{(s)}(R0)$

4.2. $\qquad R1 = R0 + R2$

4.3. $\qquad$ `If` $R4_I = 1$ `than` $0 \to CSA$ ; $R0 = NRMM^{(s)}(R0, R3)$ ; $R1 = R0 + R2$

```
        End for
```
$$0 \to CSA$$

$$MMULBY1^{(s)}(R0)$$

```
        Return CSA
```

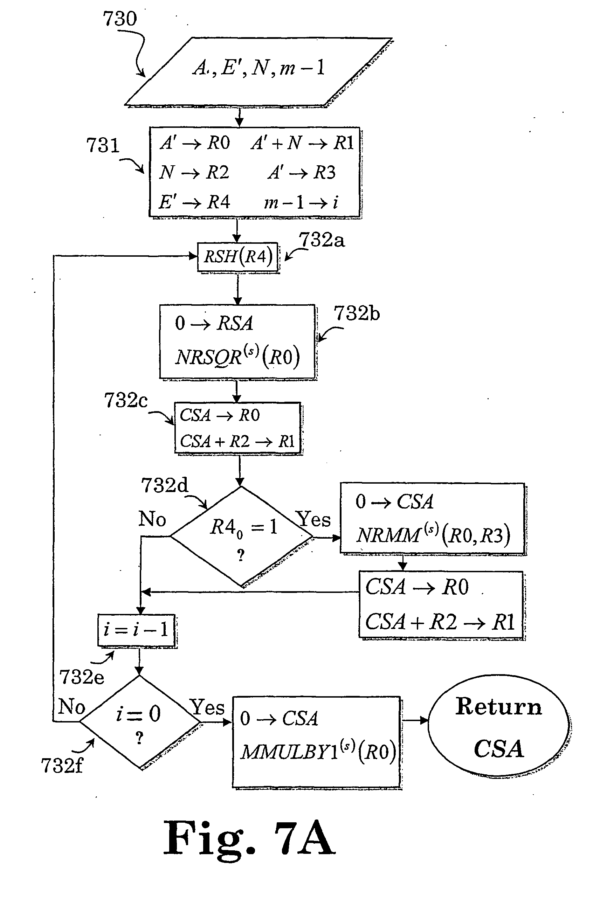

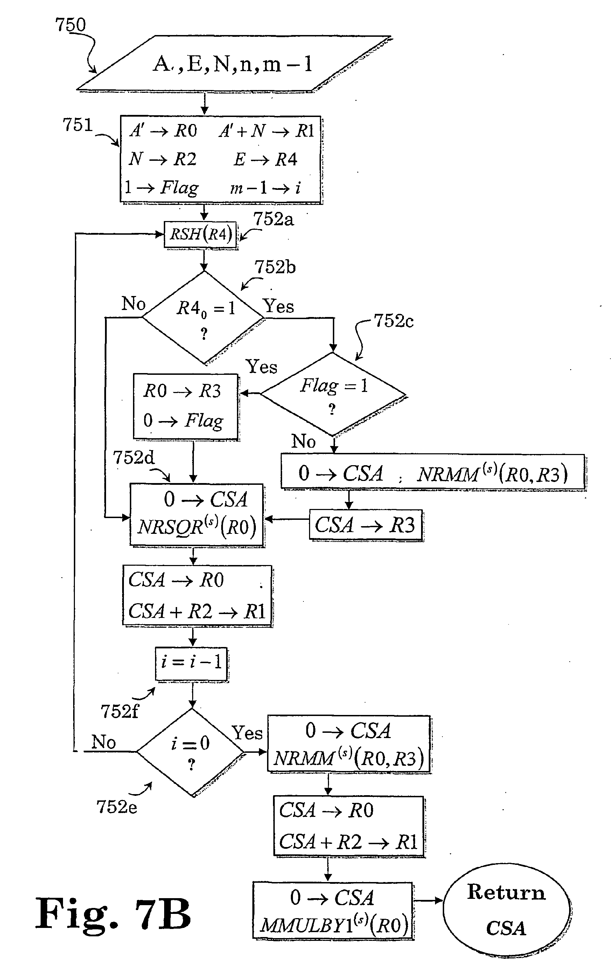

A sequence of Montgomery squaring and multiplication are performed in the loop, in the above process. The operation of the PKI apparatus utilizing process 2 is further illustrated in Fig 7A, in a form of a flowchart. The operation is initiated in steps 730 and 731, in which the values $A', E', N, and\ m$-1 are input to the PKI apparatus. A sequence of operations (steps 4.1. to 4.3. here above) are performed in a loop starting in steps 732a and 732b, where a right shift is performed to the content of register $R4$, the $CSA$ content is zeroed, and an $NRMSQR^{(s)}$ of the content of R0 is performed. In step 732c the $NRMSQR^{(s)}$ result, which is obtained in the $CSA$, is loaded into register $R0$, and the addition result of the content of the $CSA$ and the register $R2$ is loaded into register $R1$.

The operation of step 4.3. of the exponent process hereinabove is carried out in step 732d, where the LSB of R4 is examined, and if it equals "1" the $CSA$ content is zeroed and a $NRMM^{(s)}$ of the content of registers $R0$ and $R3$ is performed, the result of which is then stored in $R0$. and also added to the content of $R2$ and stored in the register $R1$. The operation proceeds in step 732e, in which the value of the loop index i is decrement by 1, and in step 732f it is checked if the loop index i equals zero. If $i$ is not zeroed another iteration of the process is performed, as the operation is proceeded in step 732a, otherwise, the $CSA$ content is zeroed and a $MMULBY1^{(s)}$ operation is performed to the content of $R0.$ The exponentiation (reduced) result is obtained in the CSA after performing the $MMULBY1^{(s)}$ operation to eliminate the $2^s$ element.

It should be understood that the process illustrated in Fig. 7A is carried out. utilizing an external control (not shown). This control may be performed by software utilizing a processor/controller, or by the addition of dedicated hardware.

Other exponentiation processes, such as right-to-left binary exponentiation, m-array exponentiation, and sliding windows exponentiation, can also be implemented analogously ("Handbook of Applied Cryptography" by Alfred J. Menezes, Paul C. van Oorschot and Scott A. Vanstone, CRC Press October 1996).

An example for one additional exponentiation method utilizing the PKI apparatus is disclosed in the following process. In this process (right-to-left binary exponentiation), the exponent value is utilized directly, the adjustment of its bits is not required

**process 3:**

**Input:** $m(>1)$, $A'$, $N$, $E$ $(A' \to R0$, $A' + N \to R1$, $N \to R2$, $A' \to R3$, $E \to R4)$

**Output:** $CSA = A^E \mod N$

```
        Flag=1

        For I from 0 to m-2 do
5.1             If (Flag=1) and (R4_I=1) then R3=R0; Flag=0
5.2             Else    IF    (R4_I=1)    then    0→CSA    ;
```
$R3 = NRMM^{(s)}(R0, R3)$

$$0 \to CSA$$

```
5.3             R0 = NRSQR^(s)(R0)
5.4             R1 = R0 + R2
        End for
        0 → CSA
```
$R0 = NRMM^{(s)}(R0, R3)$

$R1 = R0 + R2$

$MMULBY1^{(s)}(R0)$

```
        Return  CSA
```

The PKI operations in this process are illustrated in Fig. 7B. This process is initiated in steps 750 and 751, in which the values $A'$, $E'$, $N$, and $m$ - 1, are input to the PKI apparatus, and a Flag is set to "1". The operations performed in steps 5.1. to 5.4. in the exponent process here above, begins in step 752a, in which a right shift is performed to the content of register $R4$. In step 752b the LSB of $R4$ is examined, and if it equals "1" another test is performed in step 752c, to determine if the Flag is in the state of "1". If the Flag state is "1", register $R3$ is loaded with the content of register $R0$, and the flag state is reset to "0".

Otherwise, if the Flag state is "0" in step 752c, the CSA content is zeroed and a $NRMM^{(s)}$ operation is performed to the content of registers $R0$ and $R3$, the result of which is obtained in the $CSA$, and which is then loaded into the $R3$ register. The operation continues by passing the control to step 752d.

If the state of the LSB of the $R4$ register is not "1", in step 752b, the operation proceed in step 752d, where the $CSA$ content is zeroed and a $NRSQR^{(s)}$ operation of the content of $R0$ is carried out, the result of which is obtained in the $CSA$. The $NPSQR^{(s)}$ result is then loaded into register $R0$, and it is also added to the content of register $R2$. The addition result of the contents of the $CSA$ and register $R2$ is stored in register $R1$. The process proceeds in step 752f, in which the loop index $i$ is decrement by 1. In step 752e, $i$ is examined to determine if it equal zero. If $i$ is not zeroed, another iteration is performed as the control is passed to step 752a. Otherwise, the $CSA$ content is zeroed and a $NRMM^{(s)}$ operation of the $R0$ and $R3$ contents is performed, the result of which is obtained in the $CSA$, and loaded into register $R0$. The addition of the contents of register $R2$ and the $CSA$ is stored in register $R1$, the $CSA$ content is zeroed and a $MMULBY1^{(s)}$ is performed. The final result (reduced) is then obtained in the $CSA$.

As explained before, an external control is utilized to carry out the steps of this operation.

Allowing flexibility in choosing different implementations of exponentiation processes is of importance in applications. For example, a right-to-left exponentiation process enables utilizing two PKI apparatus in parallel.

It should be also appreciated that the method of the invention substantially improves the security of the PKI apparatus, particularly against attacks, which are based on the detection of subtraction operation, as performed in the conventional Montgomery Multiplication methods. In such attacks methods the user's secret (private) key is computed by revealing the reduction operations performed (W. Schindler "A Timing Attack against RSA with the. Chinese Reminder Theorem", Second International Workshop Worcester, MA, USA, August 2000). A common method, which is currently used, against such attacks is to perform additional (dummy) subtraction operations, which of course consumes more time and power. Since in the method of the invention subtractions are not performed, it is not possible to reveal the secret key utilizing such methods.

As was mentioned hereinabove, the method of the invention can be utilized to implement a right-to-left exponentiation process with two PKI apparatus operating in parallel. As will be appreciated by those having skill in the art, such a parallel implementations further improves the security of the system. Since it is difficult to follow and identify when and which operations are performed by such a parallel system, the opponent task becomes even more problematical.

Montgomery interleaved multiplication

In Fig 5 the values loaded into each register ($R0, R1, R2, R3,$ and $R4$), and the input selection of each of the multiplexers ($MX1, MX2, MX3,$ and $MX4$), are described, for different steps (I, II, III, and IV) of the Montgomery interleaved multiplication. At each step, the registers are loaded with the respective values, the MUXs control input is set to provide the corresponding input, and a process of s iterations is performed, for calculating the respective product.

In the following discussion, the Montgomery interleaved modular multiplication of $A. B$ mod $N$, wherein $A, B,$ and $N$, are 2$n$-bit values, is described. Each of the integer values, $A, B,$ and $N$, is treated as a pair of $n$-bit partial values. The partial values of $A = A^1*2^n + A^0,$ for example, are denoted as follows; $A = (A^1, A^0)$, wherein $A^1$ denotes the $n$ MSBs of $A$, and $A^0$ denotes the $n$ LSBs of A. Similarly, the partial values of $B = B^1 * 2^n +B^0$ and $N = N^1 * 2^n +N^0,$ are denoted by $B = (B^1, B^0)$, and $N=(N^1,N^0)$. This embodiment may be further modified (with software) to allow computation of $A \cdot B$ $mod N$, for $A, B,$ and $N,$ of any length. In other forms, each integer may consist of $l$ partial values, each of which is of $n$-bit.

In step I, the computation of $(A^0 * B^0 +N^0 * K^0 )/2^{-n}$ is performed by loading registers $R0, R1, R2,$ and $R3,$ with $B^0, B^0 + N^0, N^0,$ and $A^0$, respectively. In addition, the control inputs of $MX1, MX2, MX3.,$ and $MX4,$ are set to select the inputs of $K_I, K_I,$ "0", $R3$, respectively. The result $A^0 * B^0 + N^0 * K^0 )/2^{-n} A^0 * B^0 * 2^{-s}$ mod $N^0$ remains in the CSA. Since in this step MX2 selects the $K_I$ output, register R4 is loaded with bits of the $K^0$ value, which are required for the computation of the next step.

In step II, regular multiplication is performed, to calculate $A^0. B^1 + N^1 .K^0 + CSA_{(1)}$, wherein $CSA_{(I)}$ is the result that was obtained in the previous step, step I. The values $B^1, B^1 +N^1,N^1,$ and A°, are loaded into the R0, $R1,$ R2, and R3, registers, respectively, and the control inputs of $MX1, MX2, MX3,,$ and $MX4,$ are set to select the inputs of $R_4, CSA_0,$ "0", R3, respectively. It should be noted that the right shift of the bits of R3 is a cyclic bit rotation, so that there is actually no need to reload $R3$ with the value of $A^0$. Since in this step the apparatus is utilized for the calculation of regular multiplication, the $n$ LSBs of the result are fed into the serial-in of the R4 register, and the $n$ MSBs of the result remain in the CSA.

In the next step, step III, the calculation of $(A^{1}* B^0 + N° * K^1 + R4*2^n + CSA)/2$-$n$ mod $N^0$ is carried out. For this purpose, prior to any operation in this step, the value stored in the R4 register is stored in the *CSA,* and the content of the *CSA* is stored in the R4 register. In addition, registers R0, R1, R2, and R3, are loaded with the values, $B^0,N^0 + B^0, N^0,$ and $A^1$, respectively, and the control inputs of MX1, MX2, MX3, and $MX4,$ are set to select the inputs of $K_1, K_1,$ R4, $R3$, respectively. During the operation of this step, the content of the R4 register is loaded with the bits, $K_1^1$, of $K^1$. The result of this step remains in the CSA for the calculation of the final step.

In the last step, IV, the regular multiplication of $A^1*B^1+N^1*K^1+CSA_{(III)}$ is performed, wherein $CSA_{(III)}$ is the result that was obtained in step III. The values of registers R0, R1, R2, and R3, are loaded with the values $B^1, B^1 + N^1$ $N^1,$ and $A^1$, respectively, and the control inputs of $MX1, MX2, MX3,$ and MX4, are set to select the inputs of R4, $CSA_0,$ "0", $R3$, respectively. During this step the $n$ LSBs of the result are loaded into the $R4$ register, and the $n$ MSBs (which may also be of $n+1$ bits) of the result are obtained in the *CSA*.

The final result of each of the steps in this process (steps I to VI) may be greater than $N$, and thus reduction may be required. If it is required, reduction is performed by software after each step. Alternatively, one may implement the same method of interleaved multiplication by utilizing an extended non-reduced approach without needing to reduce the obtained result after each step. In addition, the computation of greater values may be carried out utilizing software for storing temporary result of the interleaved multiplication.

The above examples and description have of course been provided only for the purpose of illustration, and are not intended to limit the invention in any way. As will be appreciated by the skilled person, the invention can be carried out a great variety of ways, employing different techniques from those described above, all without exceeding the scope of the invention.

**Claims**

1. An apparatus for carrying out modular arithmetic computations utilizing a non-reduced and extended Montgomery multiplication operation of first (A) and second (B) integer values and an odd modulus (N) value having n bits, the apparatus comprising:

first, second, third, fourth, and fifth storage devices (R2, R0, R1, R3 and R4) ;
an accumulation device capable of storing n+2 bits;
a selector adapted to receive first, second and third, inputs from said first, second, and third storage devices, respectively, a fourth zero input, a first control input (C1), and a second control input (C0) corresponding to a selected bit of said first integer value, wherein said selector is able to provide said accumulation device with a selected one of said first, second, third and fourth inputs based on the values of said first and second control inputs;
state circuitry ($K_3$) adapted to provide said second control input according to a state of a selected bit of said first integer value, a state of the least-significant-bit of said second integer value, and a state of the least significant bit of the contents of said accumulation device;
a first arbitration device (Mx1) adapted to selectively associate said second control input with an output of said fifth storage device or an output of said state circuitry;
a second arbitration device (Mx2) adapted to selectively provide an input of said fifth storage device with the least significant bit of said accumulation device, the output of said state circuitry, or an output of said fifth storage device;
a third arbitration device (Mx3) adapted to selectively associate an input of said accumulation device with a zero value, or the output of said fifth storage device;
an adder(CSA) adapted to perform serial addition of n+2 bit values, said adder adapted to receive a first input from the least significant bit location of said accumulation device and a second input from an output of said first storage device; and
a controller adapted to control:

adding to the content of said accumulation device a first product value corresponding to a product of said selected bit of said first integer value, and said second integer value;
adding to the content of said accumulation device a second product value corresponding to a product of said modulus value and a least-significant-bit of the content of said accumulation device;
dividing the content of said accumulation device by two; and
obtaining the non-reduced and extended Montgomery multiplication of said first and second integer values and said modulus value by repeating said adding of said first product value, said adding of said second product value and said dividing by two for an additional n+1 times, wherein said selected bit is chosen each time, in sequence, from said first integer value.

2. The apparatus of claim 1, wherein said selector is adapted to:

select said fourth input if said first and second control inputs are zero;
select said second input if said first control input is one and said second control input is zero;
select said first input if said first control input is zero and said second control input is one; and
select said third input if said first and second control inputs are one.

3. The apparatus of claim 1 or claim 2, wherein at least one of said first, second, and third storage devices includes an n+2 bits shift register having a serial input into its most significant bit location.

4. The apparatus of any one of claims 1-3, wherein at least one of said first, second, and third storage devices is able to perform a cyclic bit rotation.

5. The apparatus of claim 1, wherein said state circuitry is adapted to produce the value of one if the state of the selected bit of said first integer value and the state of the least significant bit of said second integer value are both one and the state of the least significant bit of said accumulation device is zero, or if the state of said selected bit and the state of the least significant bit of said second integer value are different, and the state of the least significant bit of said accumulation device is one.

6. The apparatus of claim 5, wherein said state circuitry comprises:

a logical AND gate (300) having an input to receive the state of said first control input and an input to receive the state of the least significant bit of said second integer value, respectively; and
a logical XOR gate (301), having an input to receive an output of said logical AND gate and an input to receive the state of the least significant bit of said accumulation device, respectively.

7. The apparatus of any one of claims 1-6, wherein said fifth storage device comprises a shift register, and wherein the output of said fifth storage device includes the least-significant bit stored in said register and the input to said fifth storage device is stored in the most-significant bit of said register.

8. The apparatus of any one of claims 1-7 further comprising:

   a sixth storage device (R5) ; and
   a fourth arbitration device (Mx4) adapted to selectively associate said second control input with an output of said sixth storage device, or an output of said fourth storage device.

9. The apparatus of claim 8, wherein said controller is adapted to carry out non-reduced Montgomery squaring of a predetermined integer value.

10. The apparatus of claim 9, wherein said controller is adapted to:

    load said first, second, and third, storage devices with the values of said modulus value, said predetermined integer value, and the sum of said modulus and said integer values, respectively;
    set said first, second, third and fourth, arbitration devices to select the output of said state circuitry, the output of said state circuitry, the zero value, and the output of said sixth storage device, respectively;
    load said sixth storage device with the content of the second storage device;
    load the content of the accumulation device with a zero value; and
    shift the content of said sixth storage device by one bit to the right during said repeating.

11. The apparatus of claim 8, wherein said controller is adapted to:

    load said first, second, third, and fourth storage devices with the values of said modulus, said second integer, the sum of said modulus and said second integer, and said first integer, respectively;
    set said first, second, third and fourth arbitration devices to select the output of said state circuitry, the output of said state circuitry, the zero value, and the output of said fourth storage device, respectively;
    load the content of said accumulation device with a zero value; and
    shift the content of said fourth storage device by one bit to the right during said repeating.

12. The apparatus of claim 8, wherein said controller is adapted to carry out a modular exponentiation of a predetermined integer value, denoted A, an exponent, denoted $E = (e_{m-1}, e_{m-2},...,e_1, e_0)_2$ having m bits, and said modulus, denoted N.

13. The apparatus of claim 12, wherein said controller is adapted to:

    1) pre-calculate an adjusted operand value;
    2) compose an adjusted value for the exponent by reversing its bit order and eliminating the most significant bit $e_{m-1}$ to obtain an adjusted exponent value $E' = (e_0, e_1,...,e_{m-2})_2$;
    3) load the content of said first, second, third, and fifth storage devices with the values of said modulus, said adjusted operand, the sum of said modulus and said adjusted operand, and the adjusted exponent value, respectively;
    4) obtain the bit length, m, of said exponent value;
    5) right shift the content of said fifth storage device;
    6) perform an extended and non-reduced Montgomery squaring to obtain a non-reduced Montgomery square of the content of said third storage device in said accumulation device;
    7) load the content of said third storage device with the content of said accumulation device;
    8) load the content of said third storage device with the sum of the content of said first storage device and the content of said accumulation device;
    9) if the least significant bit of said fifth storage device equals "1" then:

       perform a non-reduced and extended Montgomery multiplication to obtain the non-reduced Montgomery multiplication result of the contents of said second storage device and said fourth storage device in said accumulation device;

load the content of said second storage device with the content of said accumulation device; and

load the content of said third storage device with the sum of the contents of said first storage device and said accumulation device; and repeat 5) to 9) above an additional m-2 times; and

perform said non-reduced and extended Montgomery multiplication of the content of said second storage device by 1 to obtain a final reduced result in said accumulation device.

14. The apparatus of claim 12, wherein said controller is adapted to:

1) pre-calculate an adjusted operand value;

2) load the content of said first, second, third, and fifth, storage devices with respectively the values of said modulus, said adjusted operand, the sum of said modulus and said adjusted operand, and the exponent value, obtaining the bit length m of said exponent value E, setting a flag to "1", and performing the following:

2.1) right shifting the content of said fifth storage device;

2.2) if the least significant bit of said fifth storage device equals "1" checking the state of said flag and:

if the value of said flag does not equal "1", performing said non-reduced and extended Montgomery multiplication to obtain in said accumulation device the non-reduced and extended Montgomery multiplication result of the contents of said second storage device and said fourth storage device, loading the content of said fourth storage device with the content of said accumulation device;

otherwise, loading the content of said fourth storage device with the content of said second storage device and resetting the state of said flag to "0";

2.3) performing an extended and non-reduced Montgomery squaring to obtain a non-reduced Montgomery square of the content of said second storage device in said accumulation device;

2.4) loading the content of said second storage device with the content of said accumulation device;

2.5) loading the content of said third storage device with the sum of the content of said first storage device and the content of said accumulation device;

2.6) repeating steps 2.1) to 2.5) m-1 additional times; and

3) perform an extended and non-reduced Montgomery multiplication to obtain the extended and non-reduced Montgomery multiplication result of the contents of said second storage device and said fourth storage device, in said accumulation device, load the content of said second storage device with the content of said accumulation device, load the content of said third storage device with the sum of the content of said first storage device and the content of said accumulation device, and perform an extended and non-reduced Montgomery multiplication of the content of said second storage device by 1 to obtain the final reduced result in said accumulation device.

15. The apparatus of claim 13 or claim 14, wherein said controller is adapted to calculate said adjusted operand value by performing a non-reduced extended Montgomery multiplication of said predetermined integer value, a value $H=2^s \bmod N$, and said modulus value.

16. The apparatus of any one of claims 1-15, wherein said accumulator device comprises n+2 latching stages, said stages comprising:

a first and, except for the first stage, a second flip flop device; and

a full adder device having a first input associated with an output of said first flip flop device, a second input associated with an output of the second flip flop device of a subsequent latching stage, and a third input associated with a bit output of said selector.

17. The apparatus of any one of claims 1-16, wherein said controller is adapted to set the content of said accumulation device to a predetermined value before adding said first product for the first time.

18. The apparatus of claim 17, wherein said predetermined value is zero.

19. The apparatus of claim 17, wherein said predetermined value is a value of a previously calculated non-reduced and extended Montgomery multiplication.

20. The apparatus of claim 17, wherein said predetermined value is a value of a previously calculated Montgomery squaring.

21. The apparatus of any one of claims 1-20, wherein said controller is adapted to sequentially choose said selected bit from the least significant bit to the most significant bit of said first integer.

**Patentansprüche**

1. Ein Gerät zur Ausführung modularer arithmetischer Berechnungen unter Verwendung einer nicht reduzierten und erweiterten Montgomerymultiplikationsoperation eines ersten (A) und zweiten (B) Integerwertes und eines ungeraden Modulowertes (N) mit n Bits, wobei das Gerät umfasst:

erste, zweite, dritte, vierte und fünfte Speichervorrichtungen (R2, R0, R1, R3 und R4);
eine Summierungsvorrichtung welche in der Lage ist n+2 Bits zu speichern;
einen Selektor ausgestaltet zum Empfangen erster, zweiter und dritter Eingaben von der genannten ersten beziehungsweise zweiten und dritten Speichervorrichtung, eine vierte Nulleingabe, eine erste Kontrolleingabe (C1), und eine zweite Kontrolleingabe (C0), die einem ausgewählten Bit des genannten ersten Integerwertes entspricht, wobei der genannte Selektor, basierend auf den Werten der genannten ersten und zweiten Kontrolleingaben, in der Lage ist die genannte Summierungsvorrichtung mit einer Eingabe ausgewählt aus den genannten ersten, zweiten, dritten und vierten Eingabewerten zu versorgen;
eine Zustandsschaltung ($K_1$) ausgestaltet zum Zurverfügungstellen der genannten zweiten Kontrolleingabe entsprechend einem Zustand eines ausgewählten Bits des genannten ersten Integerwertes, einem Zustand des am wenigsten signifikanten Bits des genannten zweiten Integerwertes, und einem Zustand des am wenigsten signifikanten Bits des Inhalts der genannten Summierungsvorrichtung;
eine erste Entscheidungsvorrichtung (MX1) ausgestaltet zum wählbaren Zuordnen der genannten zweiten Kontrolleingabe mit einem Ausgang der genannten fünften Speichervorrichtung oder einem Ausgang der genannten Zustandsschaltung;
eine zweite Entscheidungsvorrichtung (MX2) ausgestaltet zum wählbaren zur Verfügung Stellen einer Eingabe der genannten fünften Speichervorrichtung mit dem am wenigsten signifikanten Bit der genannten Summierungsvorrichtung, des Ausgangs der genannten Zustandsschaltung, oder einem Ausgang der genannten fünften Speichervorrichtung;
eine dritte Entscheidungsvorrichtung (MX3) ausgestaltet zum wählbaren Zuordnen eines Eingangs der genannten Summierungsvorrichtung mit einem Nullwert oder dem Ausgang der genannten fünften Speichervorrichtung;
einen Addierer (CSA) ausgestaltet zum Durchführen serieller Additionen von n+2-Bit Werten, wobei der genannte Addierer ausgestaltet ist zum Empfangen einer ersten Eingabe von dem am wenigsten signifikanten Bit der genannten Summierungsvorrichtung und einer zweiten Eingabe von einem Ausgang der genannten ersten Speichervorrichtung; und
einen Kontroller ausgestaltet zur Kontrolle von:

Addieren eines ersten Produktwertes, welcher einem Produkt des genannten gewählten Bits des genannten ersten Integerwertes und des genannten zweiten Integerwertes entspricht, zum Inhalt der genannten Summierungsvorrichtung;
Addieren eines zweiten Produktwertes, welcher einem Produkt des genannten Modulowertes und einem am wenigsten signifikanten Bit des Inhaltes der genannten Summierungsvorrichtung entspricht, zum Inhalt der genannten Summierungsvorrichtung;
Division des Inhaltes der genannten Summierungsvorrichtung durch Zwei;
und Erhalten der nicht reduzierten und erweiterten Montgomerymultiplikation der genannten ersten und zweiten Integerwerte und des genannten Modulowertes durch Wiederholen der genannten Addition des genannten ersten Produktwertes, der genannten Addition des genannten zweiten Produktwertes und die genannte Division durch Zwei für weitere n+1 male, wobei das genannte ausgewählte Bit jedes mal gewählt wird, der Reihe nach, vom genannten ersten Integerwert.

2. Gerät gemäss Anspruch 1, wobei der genannte Selektor ausgestaltet ist zum:

Selektieren der genannten vierten Eingabe falls die genannten ersten und zweiten Kontrolleingaben Null sind;

Selektieren der genannten zweiten Eingabe falls die genannte erste Kontrolleingabe Eins ist und die genannte zweite Kontrolleingabe Null ist;
Selektieren der genannten ersten Eingabe falls die genannte erste Kontrolleingabe Null ist und die genannte zweite Kontrolleingabe Eins ist; und
Selektieren der genannten dritten Eingabe falls die genannten ersten und zweiten Kontrolleingaben Eins sind.

3. Gerät gemäss Anspruch 1 oder 2, wobei zumindest eine der genannten ersten, zweiten und dritten Speichervorrichtungen ein n+2 Bit-Schieberegister umfasst, mit einem seriellen Eingang in die am meisten signifikante Bitadresse.

4. Gerät gemäss einem der Ansprüche 1 bis 3, wobei zumindest eine der genannten ersten, zweiten und dritten Speichervorrichtungen in der Lage ist eine zyklische Bitrotation auszuführen.

5. Gerät gemäss Anspruch 1, wobei die genannte Zustandsschaltung ausgestaltet ist zum Erzeugen des Wertes von Eins, falls der Zustand des gewählten Bits des genannten ersten Integerwertes und der Zustand des am wenigsten signifikanten Bits des genannten zweiten Integerwertes beide Eins sind, und der Zustand des am wenigsten signifikanten Bits der genannten Summierungsvorrichtung Null ist, oder falls der Zustand des genannten ausgewählten Bit und der Zustand des am wenigsten signifikanten Bits des genannten zweiten Integerwertes sich unterscheiden, und der Zustand des am wenigsten signifikanten Bits der genannten Summierungsvorrichtung Eins ist.

6. Gerät gemäss Anspruch 5, wobei die genannte Zustandsschaltung umfasst: ein logisches AND-Gatter (300) aufweisend eine Eingabe zum Erhalten des Zustandes der genannten ersten Kontrolleingabe beziehungsweise einen Eingang zum Erhalten des Zustandes des am wenigsten signifikanten Bits des genannten zweiten Integerwertes; und ein logisches XOR-Gatter (301) aufweisend einen Eingang zum Erhalten eines Ausgangs des genannten logischen AND-Gatters beziehungsweise eine Eingabe zum Erhalten des Zustandes des am wenigsten signifikanten Bits der genannten Summierungsvorrichtung.

7. Gerät gemäss einem der Ansprüche 1 bis 6, wobei die genannte fünfte Speichervorrichtung ein Schieberegister umfasst, und wobei die Ausgabe der genannten fünften Speichervorrichtung das am wenigsten signifikante Bit umfasst, welches im genannten Register gespeichert ist, und die Eingabe zur genannten fünften Speichervorrichtung im am meisten signifikanten Bit des genannten Registers gespeichert ist.

8. Gerät gemäss einem der Ansprüche 1 bis 7, weiter umfassend:

eine sechste Speichervorrichtung (R5); und
eine vierte Entscheidungsvorrichtung (MX4) ausgestaltet zum selektiven Zuordnen der genannten zweiten Kontrolleingabe mit einem Ausgang der genannten sechsten Speichervorrichtung, oder einem Ausgang der genannten vierten Speichervorrichtung.

9. Gerät gemäss Anspruch 8, wobei der genannte Kontroller ausgestaltet ist zum Ausführung nicht reduzierter Montgomeryquadrierung eines vorherbestimmten Integerwertes.

10. Gerät gemäss Anspruch 9, wobei der genannte Kontroller ausgestaltet ist zum:

Laden der genannten ersten, zweiten und dritten Speichervorrichtungen mit den Werten des genannten Modulowertes, beziehungsweise des genannten vorherbestimmten Integerwertes, und der Summe des genannten Modulo und der genannten Integerwerte;
Setzen der genannten ersten, zweiten, dritten und vierten Entscheidungsvorrichtungen zum Wählen der Ausgabe der genannten Zustandschaltung, beziehungsweise der Ausgabe der genannten Zustandschaltung, dem Nullwert, und der Ausgabe der genannten sechsten Speichervorrichtung;
Laden der genannten sechsten Speichervorrichtung mit dem Inhalt der zweiten Speichervorrichtung;
Laden des Inhaltes der Summierungsvorrichtung mit einem Nullwert; und
Schieben des Inhaltes der genannten sechsten Speichervorrichtung um ein Bit nach rechts während dem genannten Repetieren.

11. Gerät gemäss Anspruch 8, wobei der genannte Kontroller ausgestaltet ist zum:

Laden der genannten ersten, zweiten, dritten und vierten Speichervorrichtungen mit den Werten des genannten Modulos, beziehungsweise des genannten zweiten Integers, der Summe des genannten Modulos und des genannten zweiten Integers, und des genannten ersten Integers;

Setzen der genannten ersten, zweiten, dritten und vierten Entscheidungsvorrichtungen zum Wählen der Ausgabe der genannten Zustandschaltung, beziehungsweise der Ausgabe der genannten Zustandschaltung, dem Nullwert, und der Ausgabe der vierten Speichervorrichtung;

Laden des Inhalts der genannten Summierungsvorrichtung mit einem Nullwert; und

Schieben des Inhaltes der genannten vierten Speichervorrichtung um ein Bit nach rechts während dem genannten Repetieren.

12. Gerät gemäss Anspruch 8, wobei der genannte Kontroller ausgestaltet ist zur Ausführung einer modularen Potenzierung eines vorbestimmten Integerwertes, bezeichnet mit A, eines Exponenten, bezeichnet mit $E = (e_{m-1}, e_{m-2}, .... e_1, e_0)_2$ mit m Bits, und des genannten Modulos, bezeichnet mit N.

13. Gerät gemäss Anspruch 12, wobei der genannte Kontroller ausgestaltet ist zum:

1) Vorberechnen eines angepassten Operandwertes;

2) Bilden eines angepassten Wertes für den Exponenten durch Vertauschen deren Bitfolge und Löschen des am meisten signifikanten Bits $e_{m-1}$, um einen angepassten Exponentwert $E'=(e_0,e_1,...,e_{m-2})_2$ zu erhalten;

3) Laden des Inhalts der genannten ersten, zweiten, dritten und fünften Speichervorrichtungen mit den Werten des genannten Modulos, beziehungsweise dem genannten angepassten Operanden, der Summe des genannten Modulo und des genannten angepassten Operanden, und des angepassten Exponentwertes;

4) Erhalten der Bitlänge m des genannten Exponentwertes;

5) nach rechts Schieben des Inhaltes der genannten fünften Speichervorrichtung;

6) Durchführen einer erweiterten und nicht reduzierten Montgomeryquadrierung um eine nicht reduzierte Montgomeryquadratur des Inhalts der genannten dritten Speichervorrichtung in der genannten Summierungsvorrichtung zu erhalten;

7) Laden des Inhalts der genannten dritten Speichervorrichtung mit dem Inhalt der genannten Summierungsvorrichtung;

8) Laden des Inhalts der genannten dritten Speichervorrichtung mit der Summe des Inhalts der genannten ersten Speichervorrichtung und dem Inhalt der genannten Summierungsvorrichtung;

9) wenn das am wenigsten signifikante Bit der genannten fünften Speichervorrichtung dem Wert "1" entspricht, dann:

Durchführen einer nicht reduzierten und erweiterten Montgomerymultiplikation um das nicht reduzierte Montgomerymultiplikationsresultat der Inhalte der genannten zweiten Speichervorrichtung und der genannten vierten Speichervorrichtung in der genannten Summierungsvorrichtung zu erhalten;

Laden des Inhalts der genannten zweiten Speichervorrichtung mit dem Inhalt der genannten Summierungsvorrichtung; und

Laden des Inhalts der genannten dritten Speichervorrichtung mit der Summe der Inhalte der genannten fünften Speichervorrichtung und der genannten Summierungsvorrichtung; und

zusätzliches Wiederholen der oben genannten Schritte 5) bis 9) m-2 mal; und

Durchführen der genannten nicht reduzierten und erweiterten Montgomerymultiplikation des Inhalts der genannten zweiten Speichervorrichtung mit 1, um ein endgültiges reduziertes Resultat in der genannten Summierungsvorrichtung zu erhalten.

14. Gerät gemäss Anspruch 12, wobei der genannte Kontroller ausgestaltet ist zum:

1) Vorberechung eines angepassten Operandwertes;

2) Laden des Inhalts der genannten ersten, zweiten, dritten und fünften Speichervorrichtungen mit den jeweiligen Werten des genannten Modulos, des genannten angepassten Operanden, der Summe des genannten Modulos und des genannten angepassten Operanden, und den Exponentwert, welche die Bitlänge m des genannten Exponentwertes E erhält, Setzen einer Flag auf "1", und Durchführen des folgenden:

2.1) Verschieben des Inhalts der genannten fünfte Speichervorrichtung nach rechts;

2.2) falls das am wenigsten signifikante Bit der genannten fünften Speichervorrichtung "1" beträgt, Überprüfen des Status des genannten Flags und:

falls der Wert des genannten Flags nicht "1" beträgt, Durchführen der genannten nicht reduzierten und erweiterten Montgomerymultiplikation um in der genannten Summierungsvorrichtung das nicht reduzierte und erweitere Montgomerymultiplikationsresultat der Inhalte der genannten zweiten Speichervorrichtung und der genannten vierten Speichervorrichtung zu erhalten, Laden des Inhalts der genannten vierten Speichervorrichtung mit dem Inhalt der genannten Summierungsvorrichtung; andernfalls, Laden des Inhalts der genannten vierten Speichervorrichtung mit dem Inhalt der genannten zweiten Speichervorrichtung und Zurücksetzen des Zustand des genannten Flags auf "0";

2.3) Durchführen einer erweiterten und nicht reduzierten Montgomeryquadrierung um ein nicht reduziertes Montgomeryquadrat des Inhalts der genannte zweiten Speichervorrichtung in der genannten Summierungsvorrichtung zu erhalten;

2.4) Laden des Inhalts der genannten zweiten Speichervorrichtung mit dem Inhalt der genannten Summierungsvorrichtung;

2.5) Laden des Inhalts der genannten dritten Speichervorrichtung mit der Summe des Inhalts der genannten ersten Speichervorrichtung und dem Inhalt der genannten Summierungsvorrichtung;

2.6) zusätzliches Wiederholen der Schritte 2.1) bis 2.5) m-1 mal; und

3) Durchführen einer erweiterten und nicht reduzierten Montgomerymultiplikation um das erweiterte und nicht reduzierte Montgomerymultiplikationsresultat der Inhalte der genannten zweiten Speichervorrichtung und der genannten vierten Speichervorrichtung in der genannten Summierungsvorrichtung zu erhalten; Laden des Inhalts der genannten zweiten Speichervorrichtung mit dem Inhalt der genannten Summierungsvorrichtung; Laden des Inhalts der genannten dritten Speichervorrichtung mit der Summe des Inhalts der genannten ersten Speichervorrichtung und dem Inhalt der genannten Summierungsvorrichtung; und Durchführen einer erweiterten und nicht reduzierten Montgomerymultiplikation des Inhalts der genannten zweiten Speichervorrichtung mit 1, um ein endgültiges reduziertes Resultat in der genannten Summierungsvorrichtung zu erhalten.

15. Gerät gemäss Anspruch 13 oder Anspruch 14, wobei der genannte Kontroller ausgestaltet ist zum Berechnen des genannten angepassten Operandwertes durch Durchführen einer nicht reduzierten erweiterten Montgomerymultiplikation des genannten vorbestimmten Integerwertes, ein Wert $H=2^S \bmod N$, und des genannten Modulowertes.

16. Gerät gemäss einem der Ansprüche 1 bis 15, wobei die genannte Summierungsvorrichtung n+2 Signalspeicherstufen umfasst, wobei die genannten Stufen umfassen:

eine erste und, mit Ausnahme der ersten Stufe, eine zweite Flip-Flop-Vorrichtung; und eine Volladdiervorrichtung umfassend ein erster Eingang, welchem ein Ausgang der genannten ersten Flip-Flop-Vorrichtung zugeordnet ist, ein zweiter Eingang, welchem ein Ausgang der zweiten Flip-Flop-Vorrichtung einer nachfolgenden Signalspeicherstufe zugeordnet ist, und ein dritter Eingang, welchem ein Bitausgang des genannten Selektors zugeordnet ist.

17. Gerät gemäss einem der Ansprüche 1 bis 16, wobei der genannte Kontroller ausgestaltet ist zum Setzen des Inhalts der genannten Summierungsvorrichtung auf einen vorbestimmten Wert, bevor das genannte erste Produkt zum ersten Mal addiert wird.

18. Gerät gemäss Anspruch 17, wobei der genannte vorbestimmte Wert Null ist.

19. Gerät gemäss Anspruch 17, wobei der genannte vorbestimmte Wert ein Wert einer vorgängig berechneten, nicht reduzierten und erweiterten Montgomerymultiplikation ist.

20. Gerät gemäss Anspruch 17, wobei der genannte Wert ein Wert einer vorgängig berechneten Montgomeryquadratur ist.

21. Gerät gemäss einem der Ansprüche 1 bis 20, wobei der genannte Kontroller ausgestaltet ist zum sequentiellen Wählen des genannten ausgewählten Bits von dem am wenigsten signifikanten Bit bis zu dem am meisten signifikanten Bit des genannten ersten Integers.

**EP 1 421 472 B1**

**Revendications**

1. Appareil pour réaliser des calculs arithmétiques modulaires en utilisant une opération de multiplication de Montgomery non réduite et étendue d'une première (A) et une seconde (B) valeur entière et une valeur de modulo impair (N) possédant n bits, l'appareil comprenant :

   des premier, deuxième, troisième, quatrième et cinquième dispositifs de stockage (R2, R0, R1, R3 et R4) ;
   un dispositif d'accumulation capable de stocker n+2 bits ;
   un sélecteur adapté pour recevoir des première, deuxième et troisième entrées depuis lesdits premier, deuxième et troisième dispositifs de stockage, respectivement, une quatrième entrée de zéro ou nulle, une première entrée de commande (C1), et une deuxième entrée de commande (CO) correspondant à un bit sélectionné de ladite première valeur entière, dans lequel ledit sélecteur est capable de fournir au dit dispositif d'accumulation une entrée sélectionnée parmi lesdites première, deuxième, troisième et quatrième entrées en fonction des valeurs desdites première et deuxième entrées de commande ;
   des circuits d'état ($K_1$) adaptés pour fournir ladite deuxième entrée de commande en fonction d'un état d'un bit sélectionné de ladite première valeur entière, un état du bit le moins significatif de ladite seconde valeur entière, et un état du bit le moins significatif du contenu dudit dispositif d' accumulation ;
   un premier dispositif d'arbitrage (MX1) adapté pour associer sélectivement ladite deuxième entrée de commande avec une sortie dudit cinquième dispositif de stockage ou une sortie desdits circuits d'état ;
   un deuxième dispositif d'arbitrage (MX2) adapté pour fournir de manière sélective une entrée dudit cinquième dispositif de stockage avec le bit le moins significatif dudit dispositif d'accumulation, la sortie desdits circuits d'état, ou une sortie dudit cinquième dispositif de stockage ;
   un troisième dispositif d'arbitrage (MX3) adapté pour associer de manière sélective une entrée dudit dispositif d'accumulation avec une valeur nulle, ou la sortie dudit cinquième dispositif de stockage ;
   un additionneur (CSA) adapté pour réaliser une addition en série de n+2 valeurs binaires, ledit additionneur étant adapté pour recevoir une première entrée provenant de l'emplacement du bit le moins significatif dudit dispositif d'accumulation et une deuxième entrée provenant d'une sortie dudit premier dispositif de stockage ; et
   un contrôleur adapté pour contrôler :

      l'addition au contenu dudit dispositif d'accumulation d'une première valeur de produit correspondant à un produit dudit bit sélectionné de ladite première valeur entière, et de ladite seconde valeur entière ;
      l'addition au contenu dudit dispositif d'accumulation d'une seconde valeur de produit correspondant à un produit de ladite valeur de modulo et d'un bit le moins significatif du contenu dudit dispositif d'accumulation ;
      la division du contenu dudit dispositif d'accumulation par deux ; et
      l'obtention de la multiplication de Montgomery non réduite et étendue desdites première et seconde valeurs entières et de ladite valeur de modulo en répétant ladite addition de ladite première valeur de produit, ladite addition de ladite seconde valeur de produit et ladite division par deux pour n+1 temps additionnel, dans lequel ledit bit sélectionné est choisi à chaque fois, en séquence, à partir de ladite première valeur entière.

2. Appareil selon la revendication 1, dans lequel ledit sélecteur est adapté pour :

   sélectionner ladite quatrième entrée si lesdites première et deuxième entrées de commande sont nulles ;
   sélectionner ladite deuxième entrée si ladite première entrée de commande est un et ladite deuxième entrée de commande est nulle ;
   sélectionner ladite première entrée si ladite première entrée de commande est nulle et ladite deuxième entrée de commande est un ; et
   sélectionner ladite troisième entrée si lesdites première et deuxième entrées de commande sont un.

3. Appareil selon la revendication 1 ou la revendication 2, dans lequel au moins un desdits premier, deuxième et troisième dispositifs de stockage comprend un registre à décalage de n+2 bits possédant une entrée en série à l'emplacement de son bit le plus significatif.

4. Appareil selon l'une quelconque des revendications 1 à 3, dans lequel au moins un desdits premier, deuxième et troisième dispositifs de stockage est adapté pour réaliser une rotation binaire cyclique.

5. Appareil selon la revendication 1, dans lequel lesdits circuits d'état sont adaptés pour produire la valeur de un si l'état du bit sélectionné de ladite première valeur entière et l'état du bit le moins significatif de ladite seconde valeur entière sont tous les deux un et l'état du bit le moins significatif dudit dispositif d'accumulation est zéro, ou si l'état dudit bit sélectionné et l'état du bit le moins significatif de ladite seconde valeur entière sont différents, et l'état du bit le moins significatif dudit dispositif d'accumulation est un.

**6.** Appareil selon la revendication 5, dans lequel lesdits circuits d'état comprennent :

une porte ET logique (300) possédant une entrée pour recevoir l'état de ladite première entrée de commande et une entrée pour recevoir l'état du bit le moins significatif de ladite seconde valeur entière, respectivement ; et une porte OU exclusif logique (301) possédant une entrée pour recevoir une sortie de ladite porte ET logique et une entrée pour recevoir l'état du bit le moins significatif dudit dispositif d'accumulation, respectivement.

**7.** Appareil selon l'une quelconque des revendications 1 à 6, dans lequel ledit cinquième dispositif de stockage comprend un registre à décalage, et dans lequel la sortie dudit cinquième dispositif de stockage comprend le bit le moins significatif dans ledit registre et l'entrée vers ledit cinquième dispositif de stockage est stockée dans le bit le plus significatif dudit registre.

**8.** Appareil selon l'une quelconque des revendications 1 à 7 comprenant en outre :

un sixième dispositif de stockage (R5) ; et un quatrième dispositif d'arbitrage (MX4) adapté pour associer sélectivement ladite deuxième entrée de commande avec une sortie dudit sixième dispositif de stockage, ou une sortie dudit quatrième dispositif de stockage.

**9.** Appareil selon la revendication 8, dans lequel ledit contrôleur est adapté pour réaliser une quadrature de Montgomery non réduite d'une valeur entière prédéterminée.

**10.** Appareil selon la revendication 9, dans lequel ledit contrôleur est adapté pour :

charger dans lesdits premier, deuxième et troisième dispositifs de stockage les valeurs de ladite valeur de modulo, ladite valeur entière prédéterminée, et la somme dudit modulo et desdites valeurs entières, respectivement ; définir lesdits premier, deuxième, troisième et quatrième dispositifs d'arbitrage pour sélectionner la sortie desdits circuits d'état, la sortie desdits circuits d'état, la valeur nulle, et la sortie dudit sixième dispositif de stockage, respectivement ; charger dans ledit sixième dispositif de stockage le contenu du deuxième dispositif de stockage ; charger dans le contenu du dispositif d'accumulation une valeur nulle ; et décaler le contenu dudit sixième dispositif de stockage de un bit vers la droite pendant ladite répétition.

**11.** Appareil selon la revendication 8, dans lequel ledit contrôleur est adapté pour :

charger dans lesdits premier, deuxième, troisième et quatrième dispositifs de stockage les valeurs dudit modulo, ledit second entier, la somme dudit modulo et dudit second entier, et ledit premier entier, respectivement ; définir lesdits premier, deuxième, troisième et quatrième dispositifs d'arbitrage pour sélectionner la sortie desdits circuits d'état, la sortie desdits circuits d'état, la valeur nulle, et la sortie dudit quatrième dispositif de stockage, respectivement ; charger dans le contenu dudit dispositif d'accumulation une valeur nulle; et décaler le contenu dudit quatrième dispositif de stockage de un bit vers la droite pendant ladite répétition.

**12.** Appareil selon la revendication 8, dans lequel ledit contrôleur est adapté pour réaliser une élévation à une puissance modulaire d'une valeur entière prédéterminée, désignée par A, un exposant, désigné par $E = (e_{m-1}, e_{m-2}, ..., e_1, e_0)_2$ possédant m bits, et ledit modulo, désigné par N.

**13.** Appareil selon la revendication 12, dans lequel ledit contrôleur est adapté pour :

1) précalculer une valeur d'opérande ajustée; 2) composer une valeur ajustée pour l'exposant en inversant son ordre binaire et en éliminant le bit le plus significatif $e_{m-1}$ afin d'obtenir une valeur d'exposant ajustée $E = (e_0, e_1, ..., e_{m-2})_2$; 3) charger dans le contenu desdits premier, deuxième, troisième et cinquième dispositifs de stockage les valeurs dudit modulo, dudit opérande ajusté, la somme dudit modulo et dudit opérande ajusté, et la valeur d'exposant ajustée, respectivement ;

4) obtenir la longueur de bit, m, de ladite valeur d'exposant;

5) décaler à droite le contenu dudit cinquième dispositif de stockage;

6) réaliser une quadrature de Montgomery non réduite et étendue pour obtenir un carré de Montgomery non réduit du contenu dudit troisième dispositif de stockage dans ledit dispositif d'accumulation ;

7) charger dans le contenu dudit troisième dispositif de stockage le contenu dudit dispositif d'accumulation ;

8) charger dans le contenu dudit troisième dispositif de stockage la somme du contenu dudit premier dispositif de stockage et le contenu dudit dispositif d'accumulation ;

9) si le dernier bit le moins significatif dudit cinquième dispositif de stockage est égal à « 1 », alors :

réaliser une multiplication de Montgomery non réduite et étendue pour obtenir le résultat de multiplication de Montgomery non réduit du contenu dudit deuxième dispositif de stockage et dudit quatrième dispositif de stockage dans ledit dispositif d'accumulation ;

charger dans le contenu dudit deuxième dispositif de stockage le contenu dudit dispositif d' accumulation ; et

charger dans le contenu dudit troisième dispositif de stockage la somme du contenu dudit premier dispositif de stockage et dudit dispositif d' accumulation ; et

répéter les étapes 5) à 9) ci-dessus m-2 fois supplémentaires ; et

réaliser ladite multiplication de Montgomery non réduite et étendue du contenu dudit deuxième dispositif de stockage par 1 afin d'obtenir un résultat réduit final dans ledit dispositif d'accumulation.

**14.** Appareil selon la revendication 12, dans lequel ledit contrôleur est adapté pour :

1) précalculer une valeur d'opérande ajustée;

2) charger dans le contenu desdits premier, deuxième, troisième et cinquième dispositifs de stockage les valeurs respectives dudit modulo, dudit opérande ajusté, la somme dudit modulo et dudit opérande ajusté, et la valeur d'exposant, obtenir la longueur de bit m de ladite valeur d'exposant E, définir un indicateur à « 1 », et réaliser les étapes suivantes :

2.1) décaler à droite le contenu dudit cinquième dispositif de stockage ;

2.2) si le bit le moins significatif dudit cinquième dispositif de stockage est égal à « 1 », vérifier l'état dudit indicateur et :

si la valeur dudit indicateur n'est pas égale à « 1 », réaliser ladite multiplication de Montgomery non réduite et étendue pour obtenir dans ledit dispositif d'accumulation le résultat de multiplication de Montgomery non réduit et étendu du contenu dudit deuxième dispositif de stockage et dudit quatrième dispositif de stockage, charger dans le contenu dudit quatrième dispositif de stockage le contenu dudit dispositif d' accumulation ;

sinon, charger dans le contenu dudit quatrième dispositif de stockage le contenu dudit deuxième dispositif de stockage et redéfinir l'état dudit indicateur à « 0 »;

2.3) réaliser une quadrature de Montgomery étendue et non réduite pour obtenir un carré de Montgomery non réduit du contenu dudit deuxième dispositif de stockage dans ledit dispositif d'accumulation ;

2.4) charger dans le contenu dudit deuxième dispositif de stockage le contenu dudit dispositif d'accumulation ;

2.5) charger dans le contenu dudit troisième dispositif de stockage la somme du contenu dudit premier dispositif de stockage et le contenu dudit dispositif d' accumulation ;

2.6) répéter les étapes 2.1) à 2.5) m-1 fois supplémentaires ; et

3) réaliser une multiplication de Montgomery étendue et non réduite pour obtenir le résultat de multiplication de Montgomery étendu et non réduit du contenu dudit deuxième dispositif de stockage et dudit quatrième dispositif de stockage, dans ledit dispositif d'accumulation, charger dans le contenu dudit deuxième dispositif de stockage le contenu dudit dispositif d'accumulation, charger dans le contenu dudit troisième dispositif de stockage la somme du contenu dudit premier dispositif de stockage et le contenu dudit dispositif d'accumulation, et réaliser une multiplication de Montgomery étendue et non réduite du contenu dudit deuxième dispositif de stockage par 1 afin d'obtenir le résultat réduit final dans ledit dispositif d'accumulation.

**15.** Appareil selon la revendication 13 ou la revendication 14, dans lequel ledit contrôleur est adapté pour calculer ladite valeur d'opérande ajustée en réalisant une multiplication de Montgomery non réduite et étendue de ladite valeur entière prédéterminée, une valeur $H=2^s \bmod N$, et ladite valeur de modulo.

16. Appareil selon l'une quelconque des revendications 1 à 15, dans lequel ledit dispositif accumulateur comprend n+2 étages de verrouillage, lesdits étages comprenant :

   un premier et, à l'exception du premier étage, un second dispositif à bascule ; et
   un dispositif additionneur complet possédant une première entrée associée à une sortie dudit premier dispositif à bascule, une deuxième entrée associée à une sortie du second dispositif à bascule d'un étage de verrouillage suivant, et une troisième entrée associée à une sortie binaire dudit sélecteur.

17. Appareil selon l'une quelconque des revendications 1 à 16, dans lequel ledit contrôleur est adapté pour définir le contenu dudit dispositif d'accumulation à une valeur prédéterminée avant d'additionner ledit premier produit pour la première fois.

18. Appareil selon la revendication 17, dans lequel ladite valeur prédéterminée est nulle.

19. Appareil selon la revendication 17, dans lequel ladite valeur prédéterminée est une valeur d'une multiplication de Montgomery non réduite et étendue précédemment calculée.

20. Appareil selon la revendication 17, dans lequel ladite valeur prédéterminée est une valeur d'une quadrature de Montgomery précédemment calculée.

21. Appareil selon l'une quelconque des revendications 1 à 20, dans lequel ledit contrôleur est adapté pour choisir de manière séquentielle ledit bit sélectionné à partir du bit le moins significatif vers le bit le plus significatif dudit premier entier.

| C1 | C0 | out |
|----|----|-----|
| 0 | 0 | In0 |
| 0 | 1 | In1 |
| 1 | 0 | In2 |
| 1 | 1 | In3 |

$$B \rightarrow R2$$
$$D \rightarrow R0$$
$$B + D \rightarrow R1$$

R1  R0  R2

n+1  n+1  n+1  "0"

In3  In2  In1  In0

$C_I$  C1

$A_I$  C0  MUX  out

n+1

$A*B+C*D+CSA$

CSA  $CSA_0$

# Fig. 1 (Prior art)

$$B \rightarrow R0$$
$$B + N \rightarrow R1$$
$$N \rightarrow R2$$
$$A \rightarrow R3$$

R1  R0  R2

n+2  n+2  n+2  "0

In3  In2  In1  In0

R3  $A_I$

$K_I$  C1  MUX

C0  out

602  605

n+2

CSA  $CSA_0$

603

$R0_0$  $CSA'_1$

200

$$A * B * 2^{-s} \qquad (s = n+2)$$

# Fig. 2

30

# Fig. 4

# Fig. 3

**Step I**

$B^0 \to R0$
$B^0 + N^0 \to R1$
$N^0 \to R2$
$A^0 \to R3$
$MX1[K_I]$
$MX2[K_I]$
$MX3["0"]$
$MX4[R3]$
$(0 \to CSA)$

$MMUL(A^0, B^0)$
$(A^0 * B^0 + N^0 * K^0)/2^{-s} \to CSA$
$K^0 \to R4$

**Step II**

$B^1 \to R0$
$N^1 + B^1 \to R1$
$N^1 \to R2$
$A^0 \to R3$
$MX1[R4]$
$MX2[CSA_0]$
$MX3["0"]$
$MX4[R3]$

$RMUL(A^0, B^1, K^0, N^1)$
$MSB(A^0 * B^1 + K^0 * N^1 + CSA) \to CSA$
$LSB(A^0 * B^1 + K^0 * N^1 + CSA) \to R4$

**Step III**

$B^0 \to R0$
$N^0 + B^0 \to R1$
$N^0 \to R2$
$A^1 \to R3$
$MX1[K_I]$
$MX2[K_I]$
$MX3[R4]$
$R4 \leftrightarrow CSA$
$MX4[R3]$

$MMUL(A^1, B^0)$
$(A^1 * B^0 + N^0 * K^1 + R4 * 2^n + CSA)/2^{-s} \to CSA$
$K^1 \to R4$

**Step IV**

$B^1 \to R0$
$N^1 + B^1 \to R1$
$N^1 \to R2$
$A^1 \to R3$
$MX1[R4]$
$MX2[CSA_0]$
$MX3["0"]$
$MX4[R3]$

$RMUL(A^1, B^1, N^1, K^1)$
$MSB(A^1 * B^1 + N^1 * K^1 + CSA) \to CSA$
$LSB(A^1 * B^1 + N^1 * K^1 + CSA) \to R4$

**Result in CSA and R4**

# Fig. 5

**Fig. 6A**

**Fig. 6B**

730

$$A., E', N, m-1$$

731

| | |
|---|---|
| $A' \rightarrow R0$ | $A' + N \rightarrow R1$ |
| $N \rightarrow R2$ | $A' \rightarrow R3$ |
| $E' \rightarrow R4$ | $m-1 \rightarrow i$ |

$RSH(R4)$  732a

732b

$0 \rightarrow RSA$

$NRSQR^{(s)}(R0)$

732c

$CSA \rightarrow R0$

$CSA + R2 \rightarrow R1$

732d

No — $R4_0 = 1$ ? — Yes

$0 \rightarrow CSA$

$NRMM^{(s)}(R0, R3)$

$CSA \rightarrow R0$

$CSA + R2 \rightarrow R1$

$i = i - 1$

732e

No — $i = 0$ ? — Yes

732f

$0 \rightarrow CSA$

$MMULBY1^{(s)}(R0)$

Return

$CSA$

# Fig. 7A

750

$A', E, N, n, m-1$

751

$A' \to R0 \qquad A' + N \to R1$

$N \to R2 \qquad E \to R4$

$1 \to Flag \qquad m-1 \to i$

752a

$RSH(R4)$

752b

$R4_0 = 1$ ?

No

Yes

752c

$Flag = 1$ ?

Yes

No

$R0 \to R3$

$0 \to Flag$

$0 \to CSA \quad ; \quad NRMM^{(s)}(R0, R3)$

752d

$0 \to CSA$

$NRSQR^{(s)}(R0)$

$CSA \to R3$

$CSA \to R0$

$CSA + R2 \to R1$

$i = i - 1$

752f

752e

$i = 0$ ?

No

Yes

$0 \to CSA$

$NRMM^{(s)}(R0, R3)$

$CSA \to R0$

$CSA + R2 \to R1$

$0 \to CSA$

$MMULBY1^{(s)}(R0)$

Return

$CSA$

## Fig. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9850851 A

- US 6185596 B

### Non-patent literature cited in the description

- **ALFRED J. MENEZES ; PAUL C. VAN OORSCHOT ; SCOTT A. VANSTONE.** Handbook of Applied Cryptography. CRC Press, October 1996

- **K. HWANG.** Computer Arithmetic; Principles, Architecture, and Design. Wiley, 1979
- Montgomery modular Exponentiation on Reconfigurable Hardware. *14TH IEEE SYMP-on Arithmeric (ARITH-14,* 70-77